# EUROPEAN PATENT SPECIFICATION

(11) **EP 2 879 412 B1**
(45) Date of publication and mention of the grant of the patent: **12.09.2018**
(21) Application number: 12881730.1
(22) Date of filing: 24.07.2012
(51) Int. Cl.: H04W 4/70, H04W 84/18, H04L 12/801, H04L 12/841, H04L 29/08, H04L 12/707, H04L 12/803, H04W 4/38, H04Q 9/00

(54) **COMMUNICATION DEVICE, SYSTEM AND COMMUNICATION METHOD**
KOMMUNIKATIONSVORRICHTUNG, SYSTEM UND KOMMUNIKATIONSVERFAHREN
DISPOSITIF DE COMMUNICATION, SYSTÈME ET PROCÉDÉ DE COMMUNICATION

(43) Date of publication of application: 03.06.2015
(73) Proprietor: FUJITSU LIMITED, Kawasaki-shi Kanagawa 211-8588 (JP)
(72) Inventor: KURIHARA, Koji, Kawasaki-shi Kanagawa 211-8588 (JP); YAMASHITA, Koichiro, Kawasaki-shi Kanagawa 211-8588 (JP); SUZUKI, Takahisa, Kawasaki-shi Kanagawa 211-8588 (JP); YAMAUCHI, Hiromasa, Kawasaki-shi Kanagawa 211-8588 (JP); OTOMO, Toshiya, Kawasaki-shi Kanagawa 211-8588 (JP); TERANISHI, Yuta, Fukuoka-shi Fukuoka 814-8588 (JP)
(74) Representative: Haseltine Lake LLP
(86) International application number: PCT/JP2012/068742
(87) International publication number: WO 2014/016912

(56) References cited:
- EP-A1- 1 439 511
- JP-A- 2011 118 799
- JP-A- 2011 504 114
- US-A1- 2007 233 835
- US-A1- 2008 031 139
- US-A1- 2012 014 289
- SANDEEP KOLLI ET AL: "A dynamic programming approach: Improving the performance of wireless networks", JOURNAL OF PARALLEL AND DISTRIBUTED COMPUTING, ELSEVIER, AMSTERDAM, NL, vol. 71, no. 11, 13 July 2011 (2011-07-13) , pages 1447-1459, XP028283779, ISSN: 0743-7315, DOI: 10.1016/J.JPDC.2011.07.006 [retrieved on 2011-07-23]
- HOLLIDAY T ET AL: "Wireless link adaptation policies: QoS for deadline constrained traffic with imperfect channel estimates", PROCEEDINGS OF IEEE INTERNATIONAL CONFERENCE ON COMMUNICATIONS - 28 APRIL-2 MAY 2002 - NEW YORK, NY, USA, IEEE, PISCATAWAY, NJ, USA, vol. 5, 28 April 2002 (2002-04-28), pages 3366-3371, XP010590093, DOI: 10.1109/ICC.2002.997455 ISBN: 978-0-7803-7400-3

## Description

### TECHNICAL FIELD

The embodiments discussed herein are related to a communication apparatus, system, and communication method.

### BACKGROUND ART

Even when mobile wireless terminals include a terminal to which data cannot directly be transferred from a base station, another terminal is defined as a master device to transfer data via the master device according to a conventionally known technique (see, e.g., Patent Document 1).

In a server client system, an application program with high security performance is executed by a server while an application program with low security performance is executed by a client so as to distribute loads according to a known technique (see, e.g., Patent Document 2).

A sensor network (wireless sensor network (WSN)) is known that has multiple wireless terminals with sensors distributed in a predetermined space to enable collection of environmental or physical conditions in cooperation with each other.
Patent Document 1: Japanese Laid-Open Patent Publication No. 2007-235694
Patent Document 2: Japanese Laid-Open Patent Publication No. 2010-182176

SANDEEP KOLLI ET AL: "A dynamic programming approach: Improving the performance of wireless networks", JOURNAL OF PARALLEL AND DISTRIBUTED COMPUTING, ELSEVIER, AMSTERDAM, NL, vol. 71, no. 11, 13 July 2011, pages 1447-1459, XP028283779, ISSN: 0743-7315, DOI 10.1016/J.JPDC.2011.07.006 discloses a system in which a mobile in a network calculates the percentage of a task to be completed at a particular node based on the resources available in the network, and also discloses that nodes can decide to either execute an entire set of tasks and relay the final result, perform some tasks and transfer partial results to a neighbouring node for further processing, or only transfer the data and tasks to the next node.
HOLLIDAY T ET AL: "Wireless link adaptation policies: QoS for deadline constrained traffic with imperfect channel estimates", PROCEEDINGS OF IEEE INTERNATIONAL CONFERENCE ON COMMUNICATIONS - 28 APRIL-2 MAY 2002 - NEW YORK, NY, USA, IEEE, PISCATAWAY, NJ, USA, vol.5, 28 April 2002, pages 3366-3371, XP010590093, DOI: 10.1109/ICC.2002.997455 ISBN: 978-0-7803-7400-3 discloses packets arriving at the start of a frame having a transmission deadline at the end of the frame, and at the start of each frame a mobile generates a fixed number of bytes K that announce a common extinction time at the end of the frame. In each time slot the mobile may choose an action.
United States patent application US 20008/0031139 A1 discloses a node in a sensor network capable of instructing other nodes to perform a deceleration of information transfer in case of overload along a communication path when the transfer rate of events exceed a predefined limit. United States patent publication US 2007/0233835 A1 discloses estimating time for a node to complete a data transfer based on a history of transmissions from the node. The predictions are used to schedule transmissions.

### DISCLOSURE OF INVENTION

### PROBLEM TO BE SOLVED BY THE INVENTION

However, if data processing is executed when an event occurs and the data processing does not finish before a subsequent event occurs, the execution of the data processing may be abandoned.

In one aspect, one object of the present invention is to provide a communication apparatus, a system, and a communication method capable of reducing the abandonment of the execution of data processing when an event occurs.

### MEANS FOR SOLVING PROBLEM

According to one aspect of the present invention, a communication apparatus according to claim 1 and a communication method according to claim 9 are proposed.

Further, according to an aspect of the present invention, a system according to claim 6 is proposed.

### EFFECT OF THE INVENTION

According to one aspect of the present invention, the abandonment of the execution of data processing when an event occurs can be reduced.

### BRIEF DESCRIPTION OF DRAWINGS

FIG. 1 is an explanatory diagram of an operation example of a sensor network system;
FIG. 2 is an explanatory diagram of an event occurrence interval example;
FIG. 3 is a block diagram of a hardware configuration example of a sensor node;
FIG. 4 is a block diagram of a hardware configuration example of a master device;
FIG. 5 is a block diagram of a functional configuration example of the sensor node;
FIG. 6 is a block diagram of a functional configuration example of the master device;
FIG. 7 is an explanatory diagram of a transmission data example;
FIG. 8 is an explanatory diagram of an example of establishing a request prohibit state;
FIG. 9 is an explanatory diagram of an example of releasing the request prohibit state;
FIG. 10 is an explanatory diagram of an operation of the sensor node at the time of sensing according to Example 1;
FIG. 11 is an explanatory diagram of an operation of the sensor node at the time of receiving the request information according to Example 1;
FIG. 12 is an explanatory diagram of a data transmittable condition corresponding to a proportion of a high-load state according to Example 1;
FIG. 13 is a flowchart of an example of a process procedure (part 1) executed by the sensor node according to Example 1;
FIG. 14 is a flowchart of an example of a process procedure (part 2) executed by the sensor node according to Example 1;
FIG. 15 is a flowchart of an example of a process procedure (part 3) executed by the sensor node according to Example 1;
FIG. 16 is a flowchart of an example of a process procedure executed by the master device according to Example 1;
FIG. 17 is an explanatory diagram of a setting example of a processing transfer prohibit flag;
FIG. 18 is an explanatory diagram of an operation of the sensor node at the time of sensing according to Example 2;
FIG. 19 is an explanatory diagram of an operation of the sensor node at the time of receiving the request information according to Example 2;
FIG. 20 is an explanatory diagram of a data transmittable condition corresponding to the proportion of the high-load state according to Example 2;
FIG. 21 is a flowchart of an example of a process procedure (part 1) executed by the sensor node according to Example 2;
FIG. 22 is a flowchart of an example of a process procedure (part 2) executed by the sensor node according to Example 2;
FIG. 23 is a flowchart of an example of a process procedure (part 3) executed by the sensor node according to Example 2;
FIG. 24 is a flowchart of an example of a process procedure executed by the master device according to Example 2;
FIG. 25 is an explanatory diagram of a setting example of the processing transfer prohibit flag according to Example 3;
FIG. 26 is an explanatory diagram of an operation of the sensor node at the time of sensing according to Example 2;
FIG. 27 is an explanatory diagram of an operation of the sensor node at the time of receiving the request information according to Example 3;
FIG. 28 is a flowchart of an example of a process procedure (part 1) executed by the sensor node according to Example 3;
FIG. 29 is a flowchart of an example of a process procedure (part 2) executed by the sensor node according to Example 3;
FIG. 30 is a flowchart of an example of a process procedure (part 3) executed by the sensor node according to

### Example 3; and

FIG. 31 is a flowchart of an example of a process procedure executed by the master device according to Example 3.

### BEST MODE(S) FOR CARRYING OUT THE INVENTION

Embodiments of a communication apparatus, a system, and communication method will be described in detail with reference to the accompanying drawings. A sensor network system described in the present embodiment has a large number of sensors disposed in a predetermined region, and each sensor wirelessly transmits detection information concerning the detection thereby, while a master device capable of wirelessly communicating with the sensors in the predetermined region corrects the detection information. An apparatus equipped with a sensor and a processor capable of processing data obtained by the sensor is referred to as a sensor node. For example, the number of the sensor nodes disposed in the predetermined region is assumed to be several hundred to tens of thousands.

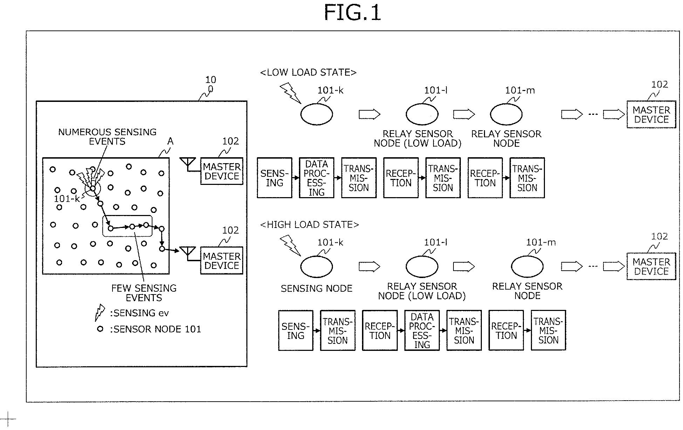

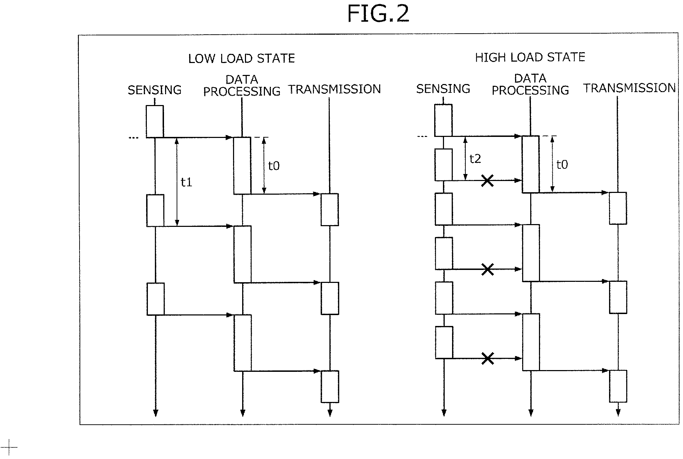

FIG. 1 is an explanatory diagram of an operation example of a sensor network system. FIG. 2 is an explanatory diagram of an event occurrence interval example. A sensor network system 100 has, for example, multiple sensor nodes 101 that are first communication apparatuses, and a master device 102 that is a second communication apparatus. Multiple master devices 102 may be disposed. The multiple sensor nodes 101 are arranged in a predetermined region A. Since the sensor nodes 101 are disposed over a wide range, it is difficult allow all the sensor nodes 101 to directly transmit data to the master device 102. The result of data processing corresponding to a sensing result is relayed and transferred via another one or more of the sensor nodes 101 to the master device 102.

The sensor node 101 performs sensing ev, data processing, and transmission. The sensing ev refers to a sensing event by a sensor included in the sensor node 101. The data processing refers to data processing that corresponds to a sensing result from the sensing ev. The transmission refers to transmission of an execution result of the data process. In the case of a low-load state, the sensing ev, the data processing, and the transmission are repeatedly performed sequentially. To transmit an execution result of the data processing to the master device 102, the sensor node 101 transmits the execution result to an apparatus directly communicable with the sensor node 101. The directly communicable apparatus is an apparatus that is directly and wirelessly communicable with the sensor node 101, among the master device 102 and the multiple sensor nodes 101 since the apparatus is located near the sensor node 101.

As indicated by a low-load state depicted in FIG. 2, a time interval t1 of the sensing ev is longer than the time t0 required for the data processing. On the other hand, as indicated by a high-load state depicted in FIG. 2, a time interval t2 of the sensing ev may be shorter than the time t0 required for the data processing. If the time interval t2 of the sensing ev is shorter than the time t0 required for the data processing, the data processing cannot catch up with the sensing ev and therefore, as indicated by a cross mark in FIG. 2, the data processing is abandoned and consequently, the sensing result must be discarded.

As described, the sensor node 101 transmits a result of the data processing through relay transmission via another one or more of the sensor nodes 101 to the master device 102. Therefore, in the present embodiment, for the sensor node 101 whose time interval for the sensing ev is shorter than the time required for the data processing, the data processing is instead executed by a relay sensor node 101 that is after a sensor node 101-k and before the master device 102. In the example depicted in FIG. 1, a relay sensor node 101-1 executes the data processing instead and transmits the execution result to a relay sensor node 101-m. The relay sensor node 101-m transmits the received execution result to another one of the sensor nodes 101. As a result, the execution result is relayed and transferred from the relay sensor node 101-1 to the master device 102.

Alternatively, for the sensor node 101-k whose time interval for the sensing ev is shorter than the time required for the data processing, a portion of the data processing is executed instead by a relay sensor node 101 that is after the sensor node 101-k and before the master device 102. As a result, the abandonment of the execution of the data processing can be reduced. Therefore, the discarding of the sensing results can be reduced.

For example, if a sensing result has an abnormality, data processing corresponding to the sensing ev is more likely to be executed by the processor in the sensor node 101. Taking a temperature sensor as an example, if a processor is interrupted when the temperature is equal to or higher than a threshold value and an event frequently occurs from the temperature sensor, an abnormality may exist at the location where the sensor node 101 is disposed. Therefore, when a sensing result has an abnormality, the high-load state is likely to occur. The master device 102 analyzes the sensing result and the execution result of the data processing that corresponds to the sensing result and transmits the execution result to a user terminal. If the analysis is executed in time series based on sensing results and execution results of data processing that corresponds to the sensing results, the discarding of a sensing result reduces the analysis accuracy. Therefore, as depicted in FIG. 1, the analysis accuracy can be improved by reducing the discarding of the sensing results.

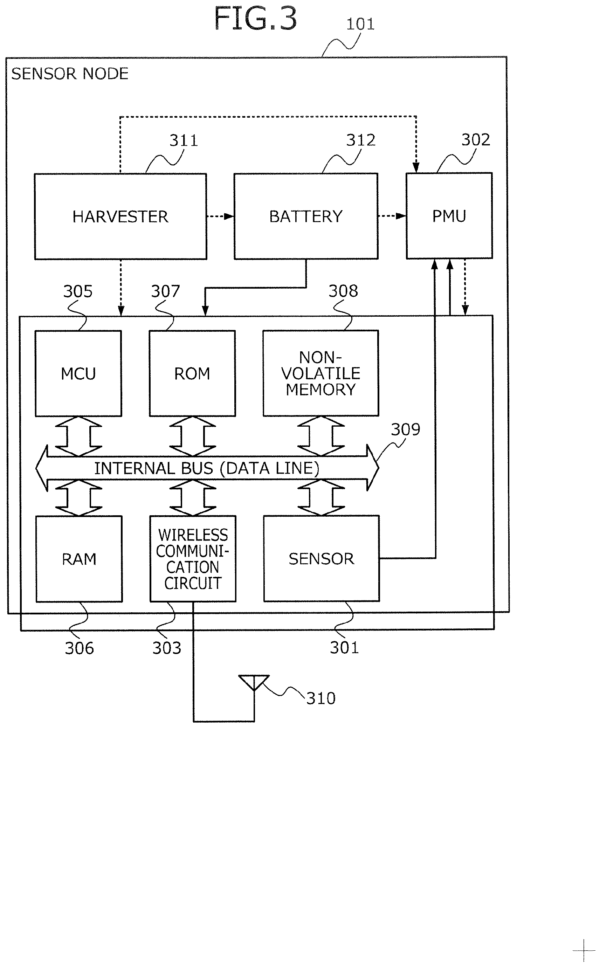

FIG. 3 is a block diagram of a hardware configuration example of a sensor node. The sensor node 101 has a sensor 301, a power management unit (PMU) 302, a wireless communication circuit 303, and a microprocessor (micro control unit (MCU)) 305. The sensor node 101 has random access memory (RAM) 306, read only memory (ROM) 307, non-volatile memory 308, and an antenna 310. The sensor node 101 has an internal bus 309 connecting the sensor 301, the wireless communication circuit 303, the microprocessor (MCU) 305, the RAM 306, the ROM 307, and the non-volatile memory 308. The sensor node 101 further has a harvester 311 and a battery 312.

The sensor 301 detects displacement at the installation site. The sensor 301 can be realized by using a piezo-electric device that detects pressure at the installation site, a device that detects the temperature, and a photoelectric device that detects light, for example. The antenna 310 transmits and receives radio waves for wireless communication with the master device 102. A wireless communication circuit (RF) 303 outputs received radio waves as a reception signal and transmits a transmission signal as radio waves via the antenna 310.

The microprocessor (MCU) 305 processes data detected by the sensor 301. The RAM 306 stores transient data of the process at the MCU 305. The ROM 307 stores a processing program executed by the MCU 305. The non-volatile memory 308 retains predetermined data written thereto even when the power supply is cut, etc.

The harvester 311 generates electricity based on a change in energy, for example, light, vibration, temperature, or radio waves (received radio waves), in the external environment at the installation site of the sensor node 101. The harvester 311 may generate electricity according to the displacement detected by the sensor 301. The battery 312 stores the electric power generated by the harvester 311. Therefore, the sensor node 101 does not need a secondary battery or an external power source and internally generates the electric power necessary for operation.

The PMU 302 provides control for supplying the electric power stored by the battery 312 or the electric power acquired by the harvester 311 as a drive power source of the units of the sensor node 101. For example, when the sensor 301 executes a sensing process, the PMU 302 supplies a power source to the MCU 305 for operating the MCU 305. If no process is executed by the MCU 305, the PMU 302 terminates the power supply to the MCU 305.

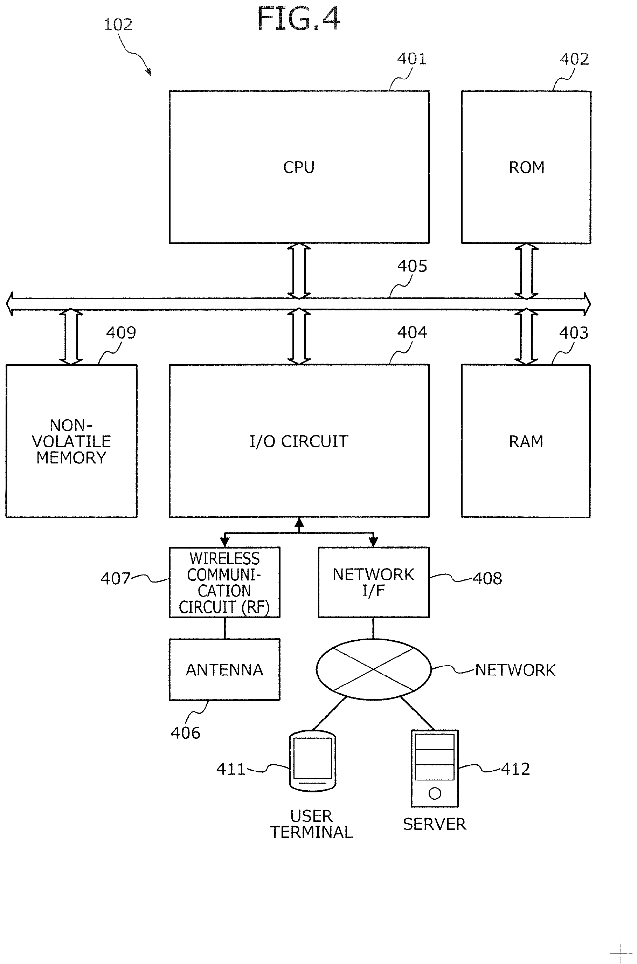

FIG. 4 is a block diagram of a hardware configuration example of the master device. Unlike the sensor node 101, the master device 102 operates based on an external power source. The master device 102 has a processor (central processing unit (CPU) 401) that is more sophisticated than the processor (MCU 305) of the sensor node 101, and ROM 402 and RAM 403 of a large capacity. The master device 102 has non-volatile memory 409 and an interface (input/output (I/O)) circuit 404. The master device 102 has a bus 405 connecting the CPU 401, the ROM 402, the RAM 403, the I/O circuit 404, and the non-volatile memory 409.

The I/O circuit 404 is connected to an antenna 406 and a wireless communication circuit (radio frequency (RF)) 407 as well as a network I/F 408. This enables the master device 102 to wirelessly communicate with the sensor node 101 via the antenna 406 and the wireless communication circuit 407. The master device 102 can communicate with external apparatuses such as a server 412 and a user terminal 411 via a network NET such as the Internet through the network I/F 408 by a TCP/IP protocol process, etc.

### (Functional Configuration Example of Sensor Node 101)

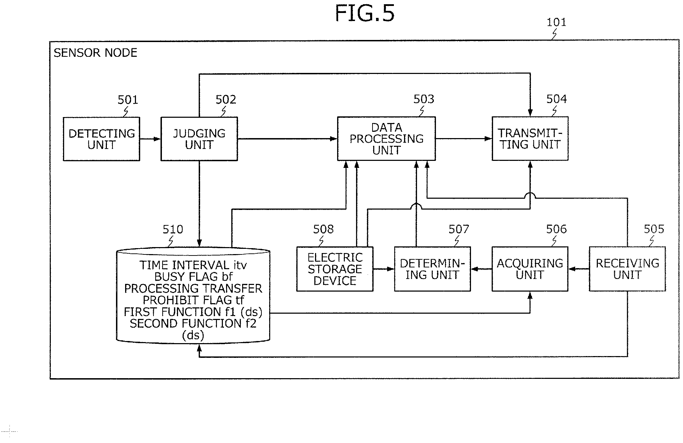

FIG. 5 is a block diagram of a functional configuration example of the sensor node. The sensor node 101 has a detecting unit 501, a judging unit 502, a data processing unit 503, a transmitting unit 504, a receiving unit 505, an acquiring unit 506, a determining unit 507, and an electric storage device 508. Each of the sensor nodes 101 stores a busy flag bf, a processing transfer prohibit flag tf, a time interval itv, a first function f1(ds), and a second function f2(ds) in a storage device 510 such as the RAM 306 and the non-volatile memory 308. The storage contents of the storage device 510 depicted in FIG. 5 will be described later. The electric storage device 508 is, for example, the battery 312. The transmitting unit 504 and the receiving unit 505 are, for example, the wireless communication circuit 303 and the antenna 310. For example, a program coding the processes for the units from the detecting unit 501 to the determining unit 507 is stored in the storage device 510 such as the ROM 307 and the non-volatile memory 308. The MCU 305 reads the program from the storage device 510 and executes the processes coded by the program, thereby realizing the processes of the units.

### (Functional Configuration Example of Master device 102)

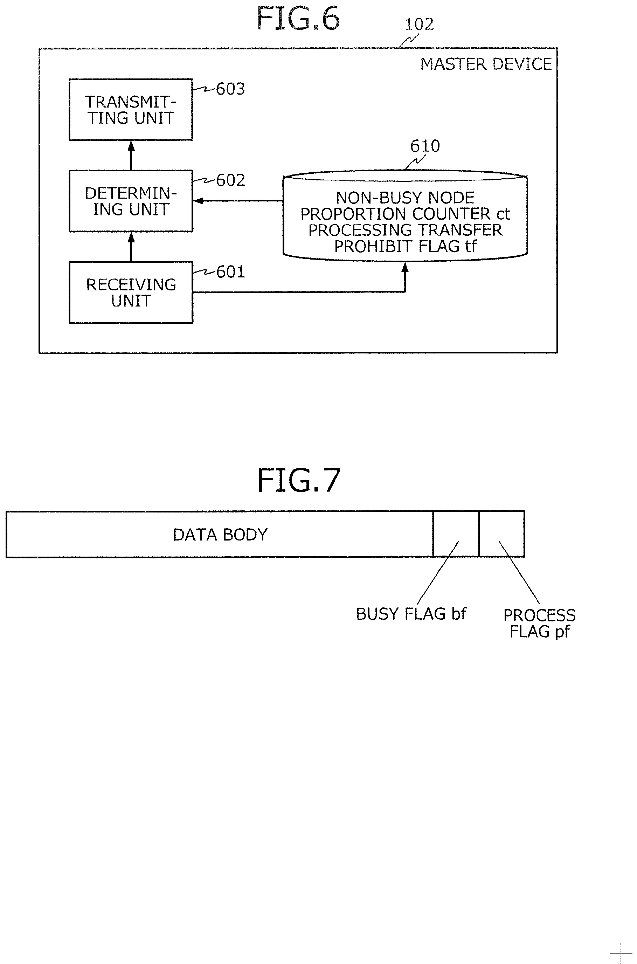

FIG. 6 is a block diagram of a functional configuration example of the master device. The master device 102 has a receiving unit 601, a determining unit 602, and a transmitting unit 603. The master device 102 has a non-busy node proportion counter ct and a processing transfer prohibit flag tf in a storage device 610 such as the RAM 403 and the non-volatile memory 409. The non-busy node proportion counter ct will be described later. The transmitting unit 601 and the receiving unit 603 are, for example, the wireless communication circuit 407 and the antenna 406. A program coding the process for the determining unit 602 is stored in a storage device such as the ROM 402 and the non-volatile memory 409. The CPU 401 reads the program from the storage device and executes the process coded by the program, thereby realizing the process of the determining unit 602. Alternatively, the CPU 401 may execute the process coded by the program via the network I/F 408.

The detecting unit 501 detects an occurrence of an event. In each of the sensor nodes 101, for example, the detecting unit 501 detects the sensing ev by the sensor 301 in the sensor node 101.

The judging unit 502 outputs judgment information indicating whether data processing corresponding to an event detected by the detecting unit 501 will finish before the occurrence of an event subsequent to the detected event, based on the time interval itv when the detecting unit 501 detects the occurrence of the event.

For example, the judging unit 502 may store an occurrence time of the sensing ev in a storage device such as the non-volatile memory 308 each time the detecting unit 501 detects an occurrence of the sensing ev. The judging unit 502 may then judge whether the time interval itv between the occurrence time of the sensing ev detected at the previous time and the occurrence time of the currently detected event is equal to or less than a threshold value. The threshold value may be the time required for a process corresponding to the sensing ev, for example. The threshold value is assumed to be stored in advance in a storage device such as the ROM 307 and the non-volatile memory 308. Alternatively, for example, multiple time intervals itv each corresponding to two events occurring at times close to each other may be stored in the storage device and the judging unit 502 may judge whether the average value of the time intervals itv is equal to or less than the threshold value.

If the judging unit 502 outputs the judgment information indicating incompletion of the corresponding data processing, the transmitting unit 504 transmits request information to a first apparatus directly communicable with the communication apparatus of the sensor node 101 thereof. The directly communicable first apparatus is a neighboring communication apparatus of the sensor node 101 thereof and is another one of the sensor nodes 101 or the master device 102. The request information is information causing another one of the sensor nodes 101 to execute the corresponding data processing and to transmit an execution result of the corresponding data processing to a second apparatus directly communicable with the first apparatus. The second apparatus is a neighboring communication apparatus of another one of the sensor nodes 101.

The transmitting unit 504 may transmit the judgment information of the sensor node 101 thereof together with the request information to the first apparatus. For example, if the judgment information indicates that the corresponding data processing will not finish, this indicates that the sensor node 101 thereof is in the high-load state. On the other hand, if the judgment information indicates that the corresponding data processing will finish, this indicates that the sensor node 101 thereof is in the low-load state.

The judging unit 502 stores judgment information indicating whether the data processing corresponding to the sensing ev will finish, into the storage device 510 of the sensor node 101 thereof. For example, the judging unit 502 sets the busy flag bf, thereby representing that the judgment information indicating incompletion of the data processing corresponding to the sensing ev is stored in the storage device 510. As a result, it is indicated that the sensor node 101 thereof is in the high-load state. For example, the judging unit 502 sets the busy flag bf by setting the busy flag bf to "1".

For example, the judging unit 502 unsets the busy flag bf, thereby representing that the judgment information indicating completion of the data processing corresponding to the sensing ev is stored in the storage device 510. As a result, it is indicated that the sensor node 101 thereof is in the low-load state. For example, the judging unit 502 unsets the busy flag bf by setting the busy flag bf to "0".

If the judging unit 502 outputs the judgment information indicating completion of the data processing corresponding to the sensing ev, the data processing unit 503 executes the data processing corresponding to the sensing ev. If the judging unit 502 output the judgment information indicating incompletion of the data processing corresponding to the sensing ev, the data processing unit 503 executes a portion of the data processing corresponding to the sensing ev. A portion of the data processing may be a process that can be executed in the time interval itv of the sensing ev, for example.

The transmitting unit 504 transmits request information and an execution result of the portion of the data processing to the first apparatus directly communicable with the sensor node 101 thereof. The request information in this case is information causing another one of the sensor nodes 101 to execute the remaining corresponding data processing excluding the completed portion of the data processing and to transmit an execution result to the second apparatus directly communicable with the first apparatus.

FIG. 7 is an explanatory diagram of a transmission data example. For example, transmission data has a data body, the busy flag bf, and a process flag pf. The data body includes, for example, identification information of the sensor node 101 thereof, a sensing result, information related to the data processing, data processing result, information such as request information described later, etc. The data body may also include identification information for identifying the sensing result and the data processing result. If the judging unit 502 judges that the data processing corresponding to the sensing ev will not finish, the transmitting unit 504 transmits the transmission data with the busy flag bf set and the process flag pf unset.

The receiving unit 505 receives the request information related to another one of the sensor nodes 101 from the neighboring sensor nodes 101 of the sensor node 101 thereof. For example, if the process flag pf included in the transmission data from another one of the sensor nodes 101 is unset, the receiving unit 505 judges that the request information causing the execution of the data processing corresponding to an event detected by the other sensor node 101 is received.

The data processing unit 503 executes the data processing indicated by the request information. The transmitting unit 504 transmits the execution result from the data processing unit 503 to a neighboring communication apparatus directly communicable with the sensor node 101 thereof. If the execution is completed by the data processing unit 503, the transmitting unit 504 transmits the execution result with the process flag pf set.

If the judgment information indicating incompletion of the data processing corresponding to the sensing ev is stored in the storage device 510, the data processing unit 503 does not execute the data processing indicated by the request information received by the receiving unit 505. The transmitting unit 504 transmits the received request information to the first apparatus directly communicable with the sensor node 101 thereof. As described above, when the judgment information indicating incompletion of the data processing corresponding to the sensing ev is stored in the storage device 510, this is a case in which the busy flag bf is set.

The acquiring unit 506 acquires a total value of the power consumption required for the data processing indicted by the request information received by the receiving unit 505 and the power consumption required for transmission of the execution result of the data processing indicated by the request information.

For example, the first function f1(ds) of an electric power required for data processing that varies according to the data size of the data processing and the second function f2(ds) of an electric power required for data transmission that varies according to the data size of the data transmission may be stored in the storage device 510. In the functions, "ds" indicates that the value of each of the functions varies depending on a data size. The acquiring unit 506 acquires a total value of a first power consumption and a second power consumption. The first power consumption is acquired by giving the first function f1(ds) the data size of information related to the data processing indicated by the request information. The second power consumption is acquired by giving the second function f2(ds) a predicted data size of the execution result of the data processing indicated by the request information. Alternatively, the sensor node 101 may calculate the first power consumption and the second power consumption to calculate the total value.

The determining unit 507 determines whether the electric power stored in the electric storage device 508 is equal to or greater than the total value acquired by the acquiring unit 506.

If the determining unit 507 determines that the stored electric power is equal to or greater than the total value, the data processing unit 503 executes the data processing indicated by the request information received by the receiving unit 505. The transmitting unit 504 transmits the execution result from the data processing unit 503 to the first apparatus directly communicable with the sensor node 101 thereof.

If the determining unit 507 determines that the stored electric power is less than the total value, the data processing unit 503 does not execute the data processing indicated by the request information received by the receiving unit 505. The transmitting unit 504 transmits the request information received by the receiving unit 505 to the first apparatus directly communicable with the sensor node 101 thereof.

For example, the processes of the acquiring unit 506 and the determining unit 507 are executed when the judgment information indicating incompletion of the data processing corresponding to the sensing ev is not stored in the storage device 510. On the other hand, arrangement may be such that the processes of the acquiring unit 506 and the determining unit 507 are not executed when the judgment information indicating incompletion of the data processing corresponding to the sensing ev is stored in the storage device 510.

### (Example 1)

If a large amount of unprocessed data is transferred in the sensor network system 100 even though the sensor nodes 101 are in the high-load state, the sensor nodes 101 must execute the reception process a number of times and further load is applied. Moreover, unprocessed data eventually reaches the master device 102. Therefore, in Example 1, if a large number of the sensor nodes 101 are in the high-load state, the master device 102 transmits to the multiple sensor nodes 101, requirement information so that the master device 102 prohibits transfer of unprocessed data to another one of the sensor nodes 101.

As described, the transmitting unit 504 transmits to the communication apparatus directly communicable with the sensor node 101 thereof, the request information together with the judgment information indicating incompletion of the data processing corresponding to the sensing ev. This judgment information is judgment information having the busy flag bf set to "set" to indicate that the data processing corresponding to the sensing ev will not finish. For example, the transmitting unit 504 performs the transmission with the busy flag bf set in the transmission data.

The receiving unit 601 receives the judgment information indicating incompletion of the data processing corresponding to the sensing ev. The determining unit 602 determines whether the judgment information indicating incompletion of the data processing corresponding to the sensing ev is received from a predetermined number or more of the sensor nodes 101 among the multiple sensor nodes 101. It is assumed that, for example, the predetermined number is determined by a designer of the sensor network system 100 and is stored in advance in the storage device such as the ROM 402 and the non-volatile memory 409. In this way, the determining unit 602 determines whether the predetermined number or more of the sensor nodes 101 is in the high-load state.

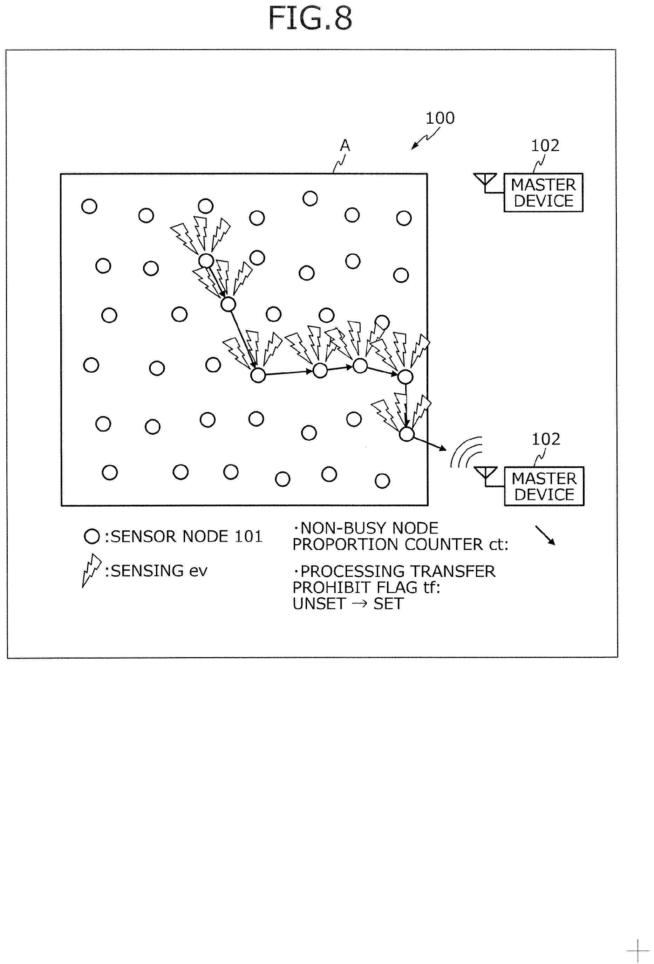

FIG. 8 is an explanatory diagram of an example of establishing a request prohibit state. For example, the master device 102 has the non-busy node proportion counter ct. The non-busy node proportion counter ct counts the proportion of the sensor nodes 101 in the low-load state among the multiple sensor nodes 101.

If the set busy flag bf is included in the transmission data received by the receiving unit 601, the determining unit 602 decrements the non-busy node proportion counter ct. For example, if the value of the non-busy node proportion counter ct becomes equal to or less than the predetermined number, the determining unit 602 determines that the predetermined number or more of the transmission data with the busy flag bf set are received. If the determining unit 602 determines that judgment information indicating incompletion of the data processing corresponding to the sensing ev is received from the predetermined number or more of the sensor nodes 101, the transmitting unit 603 transmits requirement information for the request prohibit state to the multiple sensor nodes 101. The request prohibit state is a state in which the transmission of the request information to the first apparatus directly communicable with the sensor node 101 is not allowed even when the judging unit 502 judges that the corresponding data processing will not finish. For example, the requirement information for the request prohibit state is information that sets the processing transfer prohibit flag tf included in each of the sensor nodes 101. For example, the transmitting unit 603 transmits the processing transfer prohibit flag tf changed from "unset" to "set" to all the sensor nodes 101. For example, the transmitting unit 603 transmits the processing transfer prohibit flag tf set to "1" to all the sensor nodes 101.

For example, when receiving the requirement information for the request prohibit state, the receiving unit 505 sets the processing transfer prohibit flag tf. For example, the receiving unit 505 receives the set processing transfer prohibit flag tf and stores the processing transfer prohibit flag tf received by the receiving unit 505 into the storage device 510.

For example, if the detecting unit 501 detects an occurrence of the sensing ev and the processing transfer prohibit flag tf is set, the data processing unit 503 executes the data processing corresponding to the detected sensing ev regardless of the judgment of the judging unit 502. The transmitting unit 504 transmits the execution result from the data processing unit 503 to the first apparatus directly communicable with the sensor node 101 thereof.

Since the master device 102 may receive the transmission data of the same sensor node 101 multiple times, the master device 102 may store into the storage device 610 of the master device 102, the busy flag bf included in the latest transmission data for the identification information of each of the sensor nodes 101. The master device 102 may calculate the proportion of the set busy flags bf stored in the storage device 610.

As a result, the loads of the sensor nodes 101 can be prevented from being applied to a reception process and data in an unexecuted state can be prevented from reaching the master device 102.

If the judging unit 502 outputs judgment information indicating completion of the data processing corresponding to the sensing ev, the transmitting unit 504 transmits the judgment information directly, or through another one or more of the sensor nodes 101 among the multiple sensor nodes 101, to the master device 102. For example, if the judging unit 502 judges that the data processing corresponding to the sensing ev will finish, the transmitting unit 504 transmits the execution result from the data processing unit 503 with the process flag pf set and the busy flag bf unset. For example, the transmitting unit 504 transmits the execution result with the busy flag bf set to "0".

The receiving unit 601 receives the judgment information indicating completion of the data processing corresponding to the sensing ev. The determining unit 602 determines whether judgment information indicating completion of the data processing corresponding to the sensing ev is received from a predetermined number or more of the sensor nodes 101 among the multiple sensor nodes 101. It is assumed that, for example, the predetermined number is determined by a designer of the sensor network system 100 and is stored in advance in the storage device such as the ROM 402 and the non-volatile memory 409. In this way, the determining unit 602 determines whether the predetermined number of more of the sensor nodes 101 is in the high-load state.

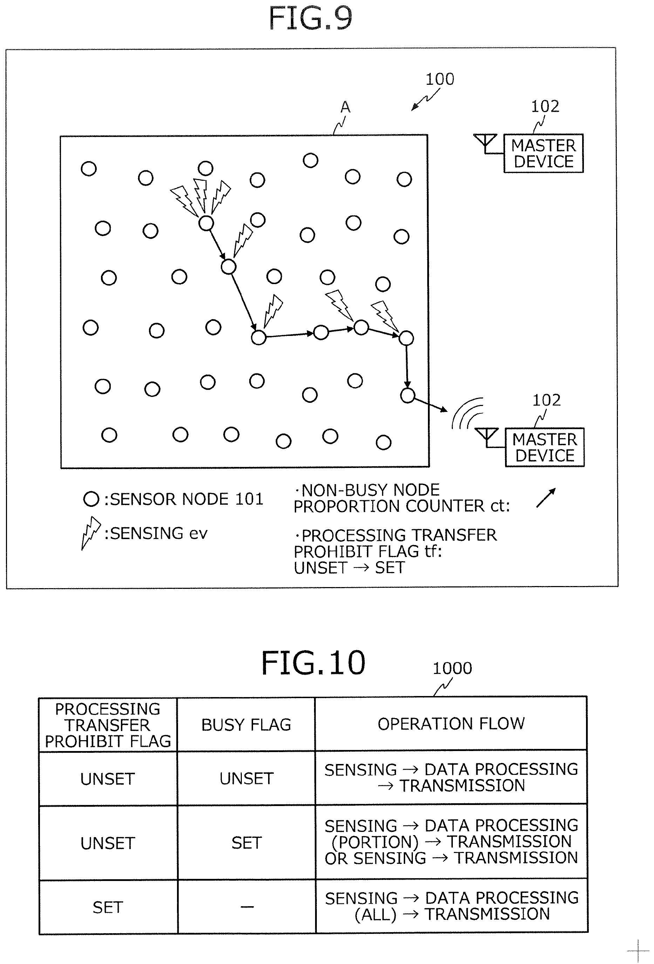

FIG. 9 is an explanatory diagram of an example of releasing the request prohibit state. For example, if the unset busy flag bf is included in the transmission data received by the receiving unit 601, the determining unit 602 increments the non-busy node proportion counter ct.

For example, if the value of the non-busy node proportion counter ct is larger than the predetermined number, the determining unit 602 determines that the predetermined number or more of the transmission data with the busy flag bf unset is received.

If the determining unit 602 determines that the judgment information indicating completion of the data processing corresponding to the sensing ev is received from the predetermined number or more of the sensor nodes 101, the transmitting unit 603 transmits requirement information for releasing the request prohibit state. For example, the transmitting unit 603 transmits the processing transfer prohibit flag tf changed from "set" to "unset" to all the sensor nodes 101. For example, the transmitting unit 603 transmits the processing transfer prohibit flag tf set to "0" to all the sensor nodes 101.

The receiving unit 505 receives the requirement information releasing the request prohibit state. For example, the receiving unit 505 receives and stores the unset processing transfer prohibit flag tf into the storage device 510. Subsequently, if the detecting unit 501 detects an occurrence of the sensing ev, the processing transfer prohibit flag tf is set to "unset". Therefore, based on the time interval itv when the detecting unit 501 detects the occurrence of the event, the judging unit 502 judges whether the data processing corresponding to the detected event will finish before a subsequent event following the event detected by the detecting unit 501.

Since the master device 102 may receive the transmission data of the same sensor node 101 multiple times, the master device 102 may store into the storage device 610 of the master device 102 the busy flag bf included in the latest transmission data for the identification information of each of the sensor nodes 101. The determining unit 602 calculates the proportion of the unset busy flags bf stored in the storage device 610. The determining unit 602 may determine whether the judgment information indicating completion of the data processing corresponding to the sensing ev is received from a predetermined number or more of the sensor nodes 101 among the multiple sensor nodes 101, based on the determination of whether the calculated proportion is equal to or greater than a predetermined proportion.

FIG. 10 is an explanatory diagram of an operation of the sensor node at the time of sensing according to Example 1. Table 1000 represents the operation of the sensor node 101 based on the states of the processing transfer prohibit flag tf and the busy flag bf. For example, if the processing transfer prohibit flag tf is unset and the busy flag bf is unset, the sensor node 101 performs the sensing ev, the data processing, and the transmission in this order.

For example, if the processing transfer prohibit flag tf is unset and the busy flag bf is set, the sensor node 101 performs the sensing ev and the transmission in this order without executing the data processing. Alternatively, the sensor node 101 performs the sensing ev, a portion of the data processing, and the transmission in this order.

For example, if the processing transfer prohibit flag tf is set, the sensor node 101 performs the sensing ev, all of the data processing, and the transmission in this order regardless of the state of the busy flag bf.

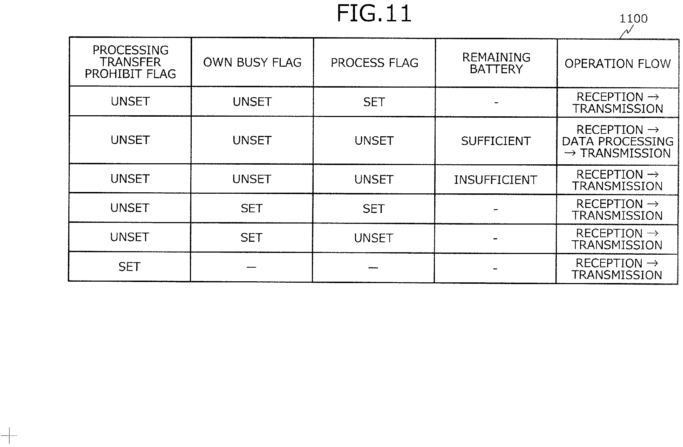

FIG. 11 is an explanatory diagram of an operation of the sensor node at the time of receiving the request information according to Example 1. Table 1100 represents the operation of the sensor node 101 based on the flags and the remaining amount of the battery 312 when the relay sensor nodes 101 after a given sensor node 101 and before the master device 120 receive the request information from the given sensor node 101.

First, description will be made of a case in which the processing transfer prohibit flag tf is unset. For example, if the busy flag bf of the sensor node 101 is unset and the process flag pf of the received request information is set, the sensor node 101 transmits the received request information to the first apparatus directly communicable with the sensor node 101.

For example, if the busy flag bf of the sensor node 101 is unset and the process flag pf is unset, the sensor node 101 executes the data processing indicated by the received request information, given that the remaining amount of the battery 312 is sufficient. The sensor node 101 transmits the execution result along with the set process flag pf to the first apparatus directly communicable with the sensor node 101. A sufficient remaining amount of the battery 312 means that the total value of the electric power required for the data transmission and the electric power required for the data processing is equal to or less than the remaining amount of the battery 312.

For example, if the busy flag bf of the sensor node 101 is unset and the process flag pf is unset while the remaining amount of the battery 312 is insufficient, the sensor node 101 transmits the received request information to the directly communicable first apparatus. An insufficient remaining amount of the battery 312 means that the total value of the electric power required for the data transmission and the electric power required for the data processing is greater than the remaining amount of the battery 312.

For example, if the busy flag bf of the sensor node 101 is set and the process flag pf is set, the sensor node 101 transmits the received request information to the neighboring sensor nodes 101 of the sensor node 101. For example, if the busy flag bf of the sensor node 101 is set and the process flag pf is unset, the sensor node 101 transmits the received request information to the first apparatus directly communicable with the sensor node 101.

Description will be made of a case in which the processing transfer prohibit flag tf is set. If the processing transfer prohibit flag tf is set, the sensor node 101 transmits the received request information to the first apparatus directly communicable with the sensor node 101 regardless of the states of the busy flag bf of the sensor node 101 and the process flag pf.

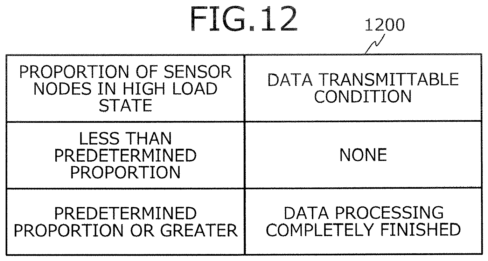

FIG. 12 is an explanatory diagram of a data transmittable condition corresponding to the proportion of the high-load state according to Example 1. Table 1200 represents conditions for data transmission corresponding to the proportion of the sensor nodes 101 in the high-load state among the multiple sensor nodes 101. For example, if the proportion of the sensor nodes 101 in the high-load state among the multiple sensor nodes 101 is less than the predetermined proportion, the sensor nodes 101 have no prohibitive condition for data transmission. Therefore, the sensor node 101 may transmit any among the execution result of the data processing, request information for the data processing, and the execution result of the portion of the data processing and request information for the remaining data processing, to the first apparatus directly communicable with the sensor node 101. A proportion less than the predetermined proportion means that, for example, as described above, the judgment information indicating incompletion of the data processing corresponding to the sensing ev is not transmitted by the predetermined number or more of the sensor nodes 101 among the multiple sensor nodes 101.

For example, if the proportion of the sensor nodes 101 in the high-load state among the multiple sensor nodes 101 is equal to or greater than the predetermined proportion, the sensor nodes 101 are prohibited from transmitting the request information and can transmit only the execution result of the entirely completed data processing.

### (Process Procedure Executed by Sensor Node 101 According to Example 1)

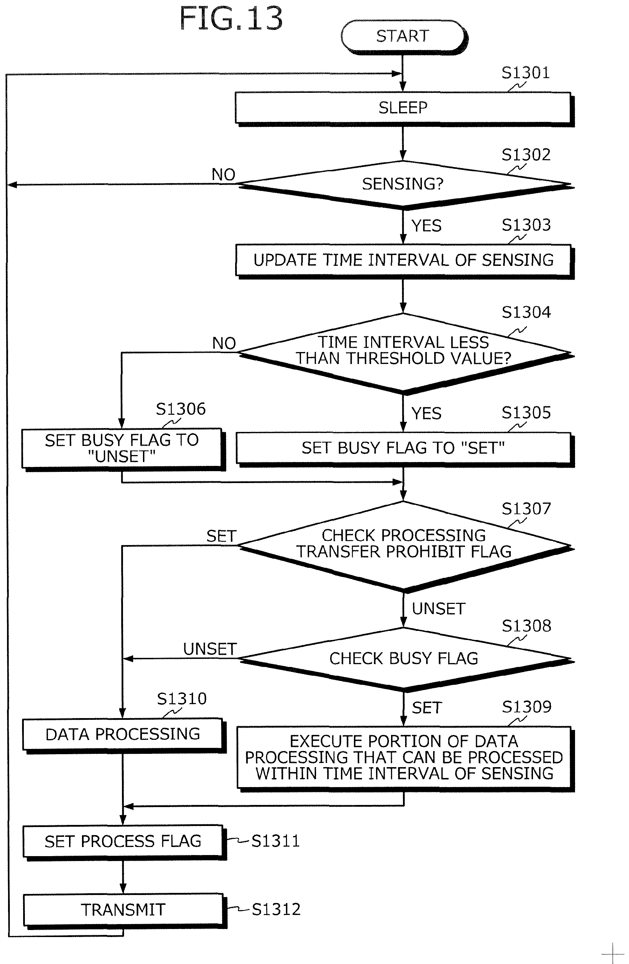

FIG. 13 is a flowchart of an example of a process procedure (part 1) executed by the sensor node according to Example 1. First, the sensor node 101 stands by in a SLEEP state (step S1301) and judges whether an occurrence of the sensing ev is detected (step S1302). If an occurrence of the sensing ev is not detected (step S1302: NO), the sensor node 101 returns to step S1301 and stands by in the SLEEP state.

If an occurrence of the sensing ev is detected (step S1302: YES), the sensor node 101 updates the time interval itv of the sensing ev (step S1303). For example, the sensor node 101 may store an occurrence time of past sensing ev and may calculate the difference between the occurrence time of the last sensing ev and the occurrence time of the newly detected sensing ev to calculate the time interval itv of the sensing ev. For example, the sensor node 101 may calculate the average of the time intervals itv of the past sensing ev.

The sensor node 101 judges whether the time interval itv of the sensing ev is less than a threshold value (step S1304). The threshold value may be the time required for the data processing, for example. This enables the sensor node 101 to judge whether the data processing corresponding to the detected event will finish before the occurrence of an event subsequent to the detected event. If the time interval itv of the sensing ev is less than the threshold value (step S1304: YES), the sensor node 101 sets the busy flag bf to "set" (step S1305). If the time interval itv of the sensing ev is not less than the threshold value (step S1304: NO), the sensor node 101 sets the busy flag bf to "unset" (step S1306).

After step S1305 or step S1306, the sensor node 101 checks the processing transfer prohibit flag tf stored in the storage device 510 (step S1307). If the processing transfer prohibit flag tf is unset (step S1307: UNSET), the sensor node 101 checks the busy flag bf stored in the storage device 510 (step S1308).

If the busy flag bf is set (step S1308: SET), the sensor node 101 executes a portion of the data processing that can be processed within the time interval itv of the sensing (step S1309) and sets the process flag pf (step S1311). In this case, the data processing is not completed and therefore, the process flag pf is set to "unset". The sensor node 101 transmits the execution result of the portion of the data processing together with request information to an apparatus directly communicable with the sensor node 101 (step S1312) and returns to step S1301. The request information in this case includes the information causing the execution of the data processing excluding the completed portion of the data processing and information causing the transmission of data processing excluding the portion of the data processing to a directly communicable apparatus. In the example of FIG. 13, even when the busy flag bf is set to "set", the portion of the data processing is executed as in S1309; however, this is not a limitation and the sensor node 101 may immediately transmit the request information without executing data processing.

If the processing transfer prohibit flag tf is set (step S1307: SET) or if the busy flag bf is unset (step S1308: UNSET), the sensor node 101 executes the data processing completely (step S1310). The sensor node 101 sets the process flag pf (step S1311). Since the data processing is executed completely, the process flag is set to "set". The sensor node 101 transmits the execution result of the data processing to the apparatus directly communicable with the sensor node 101 (step S1312).

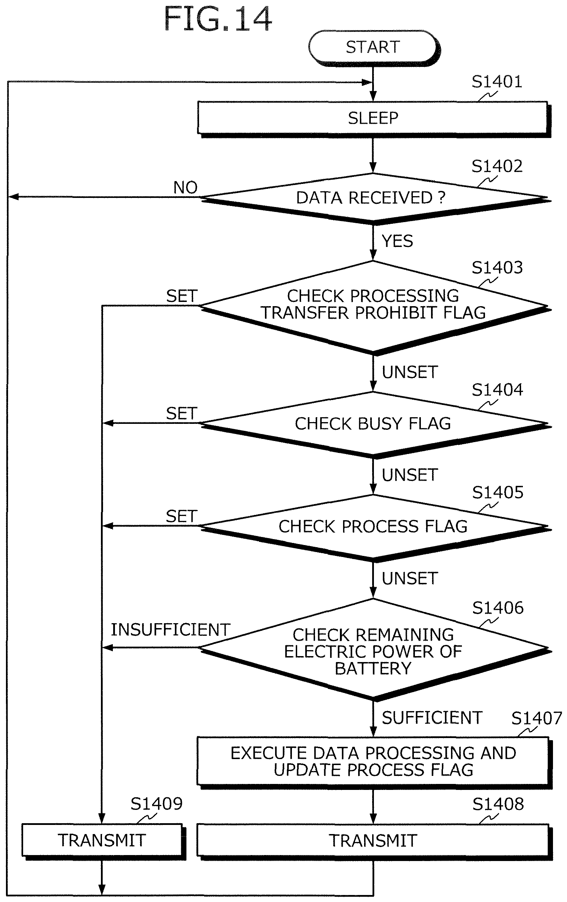

FIG. 14 is a flowchart of an example of a process procedure (part 2) executed by the sensor node according to Example 1. First, the sensor node 101 stands by in the SLEEP state (step S1401) and judges whether data has been received from a neighboring sensor node 101 of the sensor node 101 (step S1402). If data has not been received from a neighboring sensor node 101 of the sensor node 101 (step S1402: NO), the sensor node 101 returns to step S1401 and stands by in the SLEEP state.

If data has been received from a neighboring sensor node 101 of the sensor node 101 (step S1402: YES), the sensor node 101 checks the processing transfer prohibit flag tf stored in the storage device 510 (step S1403). If the processing transfer prohibit flag tf is set (step S1403: SET), the sensor node 101 transmits the received data to the apparatus directly communicable with the sensor node 101 (step S1409). If the processing transfer prohibit flag tf is unset (step S1403: UNSET), the sensor node 101 checks the busy flag bf stored in the storage device 510 (step S1404). If the busy flag bf is set (step S1404: SET), the sensor node 101 goes to step S1409.

If the busy flag bf is unset (step S1404: UNSET), the sensor node 101 checks the process flag pf of the received data (step S1405). If the process flag pf is set to "set" (step S1405: SET), the data processing for the received data has been completed and therefore, the sensor node 101 goes to step S1409. If the process flag pf is not set to "set" (step S1405: UNSET), the sensor node 101 checks the remaining electric power of the battery 312 (step S1406). In this case, the sensor node 101 estimates the total value of the electric power required for executing the data processing indicated by the received data and the electric power required for transmitting the execution result of the data processing indicated by the received data. The sensor node 101 determines whether the electric power of the battery 312 is sufficient or insufficient based on whether the electric power of the battery 312 is equal to or greater than the total value. For example, if the electric power of the battery 312 is equal to or greater than the total value, the sensor node 101 determines that the electric power is sufficient and if the electric power of the battery 312 is less than the total value, the sensor node 101 determines that the electric power is insufficient.

If the electric power is sufficient (step S1406: SUFFICIENT), the sensor node 101 executes the data processing indicated by the received data and updates the process flag pf (step S1407). The sensor node 101 transmits the execution result of the data processing to the apparatus directly communicable with the sensor node 101 (step S1408) and returns to step S1401. On the other hand, if the electric power is insufficient (step S1406: INSUFFICIENT), the sensor node 101 goes to step S1409.

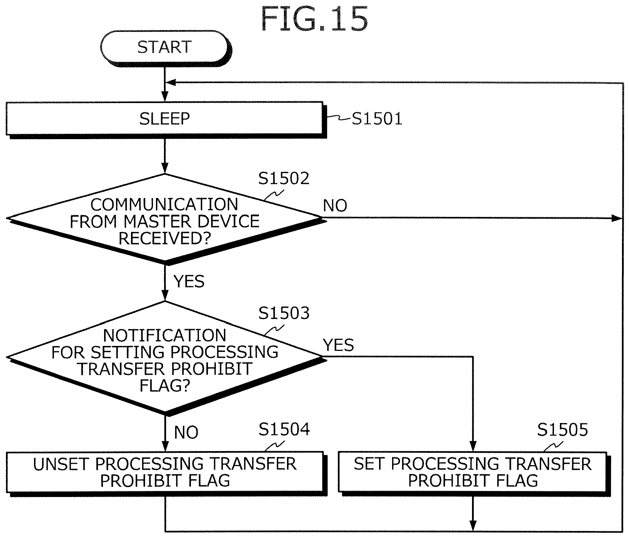

FIG. 15 is a flowchart of an example of a process procedure (part 3) executed by the sensor node according to Example 1. First, the sensor node 101 stands by in the SLEEP state (step S1501) and judges whether communication from the master device 102 has been received (step S1502). If communication from the master device 102 has not been received (step S1502: NO), the sensor node 101 returns to step S1501 and stands by in the SLEEP state.

If communication from the master device 102 has been received (step S1502: YES), the sensor node 101 judges whether the communication is notification for setting or unsetting the processing transfer prohibit flag tf (step S1503). In the case of the notification for unsetting the processing transfer prohibit flag tf (step S1503: NO), the sensor node 101 unsets the processing transfer prohibit flag tf stored in the storage device 510 of the sensor node (step S1504) and returns to step S1501. In the case of the notification for setting the processing transfer prohibit flag tf (step S1503: YES), the sensor node 101 sets the processing transfer prohibit flag tf stored in the storage device 510 of the sensor node (step S1505) and returns to step S1501.

### (Process Procedure Executed by Master Device 102 According to Example 1)

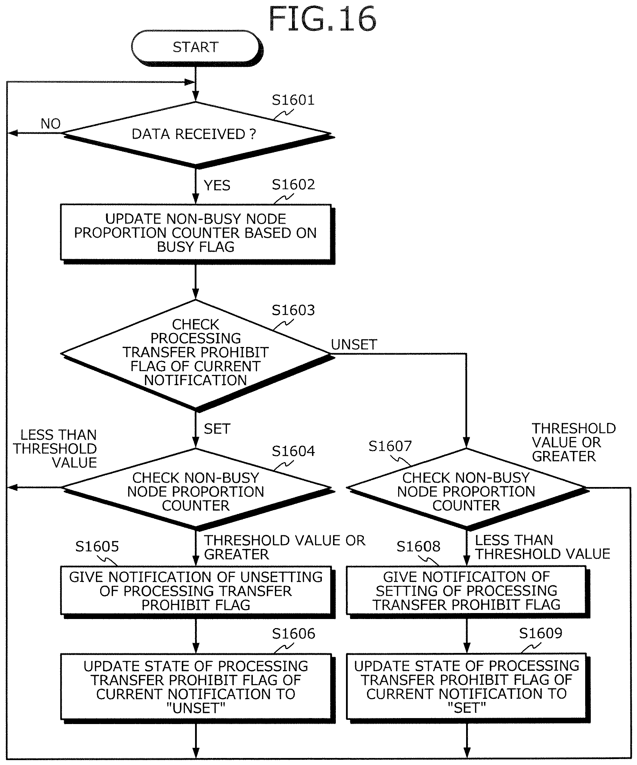

FIG. 16 is a flowchart of an example of a process procedure executed by the master device according to Example 1. First, the master device 102 judges whether data from the sensor node 101 has been received (step S1601). If data from the sensor node 101 has not been received (step S1601: NO), the master device 102 returns to step S1601. If data from the sensor node 101 has been received (step S1601: YES), the master device 102 updates the non-busy node proportion counter ct based on the busy flag bf included in the received data (step S1602). For example, the master device 102 stores the identification information of the sensor node 101 and the busy flag bf included in the received data in a correlated manner. The master device 102 may set the value of the non-busy node proportion counter ct based on the number of the sensor nodes 101 and the number of the unset busy flags bf.

The master device 102 checks the processing transfer prohibit flag tf of the current notification (step S1603). For example, the master device 102 may store the processing transfer prohibit flag tf into the storage device 610 and the master device 102 may refer to the storage device 610 to check the processing transfer prohibit flag tf of the current notification. If the processing transfer prohibit flag tf of the current notification is set (step S1603: SET), the master device 102 checks the non-busy node proportion counter ct (step S1604).

If the non-busy node proportion counter ct is equal to or greater than the threshold value (step S1604: THRESHOLD VALUE OR GREATER), the master device 102 notifies the multiple sensor nodes 101 of the unsetting of the processing transfer prohibit flag tf (step S1605). As a result, the requirement information is transmitted to the multiple sensor nodes 101 to release the request prohibit state prohibiting the transmission of the request information to directly communicable apparatuses. The master device 102 updates the state of the processing transfer prohibit flag tf of the current notification to "unset" (step S1606) and returns to step S1601. If the non-busy node proportion counter ct is less than the threshold value at step S1604 (step S1604: LESS THAN THRESHOLD VALUE), the master device 102 returns to step S1601.

If the processing transfer prohibit flag tf of the current notification is unset (step S1603: UNSET), the master device 102 checks the non-busy node proportion counter ct (step S1607). If the non-busy node proportion counter ct is less than the threshold value (step S1607: LESS THAN THRESHOLD VALUE), the master device 102 notifies the multiple sensor nodes 101 of setting of the processing transfer prohibit flag tf (step S1608). As a result, the requirement information is transmitted to the multiple sensor nodes 101 to establish the request prohibit state prohibiting the transmission of the request information to directly communicable apparatuses even when the sensor node 101 judges that the data processing corresponding to the detected event does not finish before the occurrence of the subsequent event. The master device 102 updates the state of the processing transfer prohibit flag tf of the current notification to "set" (step S1609) and returns to step S1601. If the non-busy node proportion counter ct is equal to or greater than the threshold value at step S1607 (step S1607: THRESHOLD VALUE OR GREATER), the master device 102 goes to step S1601.

### (Example 2)

In Example 2, the amount of data processing executed by a sensing node is classified into two stages depending on the proportion of the sensor nodes 101 in the high-load state. As a result, if a small number of the sensor nodes 101 are in the high-load state, the load of the sensor node 101 in the high-load state can be distributed to another one of the sensor nodes 101. If a large number of the sensor nodes 101 are in the high-load state, unexecuted data processing can be prevented from being transmitted to the master device 102 by reducing the amount of data processing requested to another one of the sensor nodes 101.

If the judging unit 502 outputs judgment information indicating incompletion of the data processing corresponding to the sensing ev, the transmitting unit 504 transmits the judgment information directly, or through another one or more of the sensor nodes 101 among the multiple sensor nodes 101, to the master device 102.

The receiving unit 601 receives the judgment information indicating incompletion of the data processing corresponding to the sensing ev. Based on the reception result of the judgment information indicating incompletion of the data processing corresponding to the sensing ev, the determining unit 602 determines the number of the sensor nodes 101 transmitting the judgment information indicating incompletion of the data processing corresponding to the sensing ev among the multiple sensor nodes 101. The transmitting unit 603 transmits to the multiple sensor nodes 101, determination information based on the determined number. For example, the determination information may be the determined number, a proportion based on the determined number among the multiple sensor nodes 101, or information indicating the proportion. In this example, the determination information is the processing transfer prohibit flag tf, for example. In Example 2, the processing transfer prohibit flag tf is assumed to be 2-bit data.

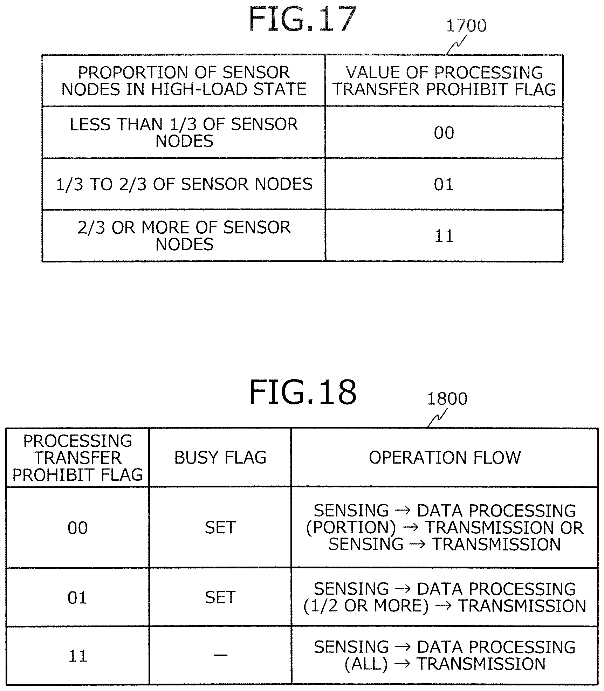

FIG. 17 is an explanatory diagram of a setting example of the processing transfer prohibit flag. Table 1700 indicates the value of the processing transfer prohibit flag tf determined according to proportion. For example, if the sensor nodes 101 in the high-load state account for less than 1/3 of the multiple sensor nodes 101, the master device 102 sets the processing transfer prohibit flag tf to "00". For example, if the sensor nodes 101 in the high-load state account for 1/3 or more and less than 2/3 of the multiple sensor nodes 101, the master device 102 sets the processing transfer prohibit flag tf to "01". For example, if the sensor nodes 101 in the high-load state account for 2/3 or more of the multiple sensor nodes 101, the master device 102 sets the processing transfer prohibit flag tf to "11".

The receiving unit 505 receives the determination information. For example, the receiving unit 505 receives the processing transfer prohibit flag tf from the master device 102. If the judging unit 502 judges that the corresponding data processing will not finish, the data processing unit 503 executes a portion of the corresponding data processing, at the proportion indicated by the determination information.

The transmitting unit 504 transmits request information and an execution result of the portion of the data processing to a neighboring sensor node 101 of the sensor node 101 thereof. The request information in this case is information causing an apparatus directly communicable with the sensor node 101 to execute data processing other than the portion of the data processing and to transmit an execution result of the data processing to an apparatus directly communicable with the directly communicable apparatus.

FIG. 18 is an explanatory diagram of an operation of the sensor node at the time of sensing according to Example 2. Table 1800 represents the operation of the sensor node 101 based on the states of the processing transfer prohibit flag tf and the busy flag bf. For example, if the processing transfer prohibit flag tf is "00" and the busy flag bf is set, the sensor node 101 performs the sensing ev, the execution of the portion of the data processing, and the transmission in this order. For example, the portion of the data processing is of data processing amount that can be processed within the time interval itv of the occurrence of the event. Alternatively, the sensor node 101 performs the sensing ev and the transmission in this order without executing the data processing.

For example, if the processing transfer prohibit flag tf is "01" and the busy flag bf is set, the sensor node 101 performs the sensing ev, the execution of data processing equal to or greater than 1/2 the data processing, and the transmission in this order.

For example, if the processing transfer prohibit flag tf is "11", the sensor node 101 performs the sensing ev, the execution of all of the data processing, and the transmission in this order regardless of the state of the busy flag bf.

In the case of states of the flags other than those described in Table 1800, the sensor node 101 performs the sensing ev, the execution of all of the data processing, and the transmission in this order.

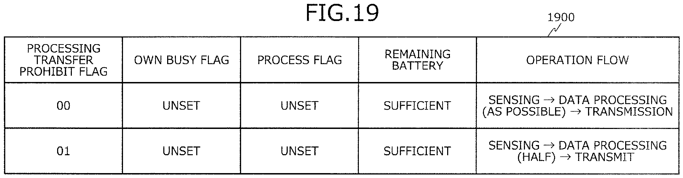

FIG. 19 is an explanatory diagram of an operation of the sensor node at the time of receiving the request information according to Example 2. Table 1900 represents the operation of the sensor node 101 based on the flags and the remaining amount of the battery 312 when relay sensor nodes 101 after a given sensor node 101 and before the master device 120 receive the request information from the given sensor node 101.

For example, the processing transfer prohibit flag tf is "00" while the busy flag bf of the sensor node 101 is unset and the process flag pf of the received request information is unset. In this case, if the remaining amount of the battery 312 is sufficient, the sensor node 101 executes the data processing indicated by the received request information as much as possible (e.g., by referring to the time interval itv of the occurrence of the event). The sensor node 101 transmits to the first apparatus, the execution result and request information that causes the first apparatus directly communicable with the sensor node to execute the data processing excluding the already executed portion of the data processing indicated by the received request information.

The processing transfer prohibit flag tf is "01" and the busy flag bf of the sensor node 101 is unset. In this case, if the process flag pf of the received request information is unset and the remaining amount of the battery 312 is sufficient, the sensor node 101 executes data processing equal to 1/2 the processing amount of the overall amount of the data processing indicated by the received request information. The sensor node 101 transmits to the first apparatus directly communicable with the sensor node 101, the request information for data processing excluding the already executed portion of the data processing indicated by the request information, together with the execution result. For example, if 1/2 of the received request information is already executed, the sensor node 101 completely executes the data processing indicated by the received request information.

In the case of the flags and the remaining amount of the battery 312 other than those of Table 1900, the sensor node 101 transmits the received request information to the first apparatus directly communicable with the sensor node 101.

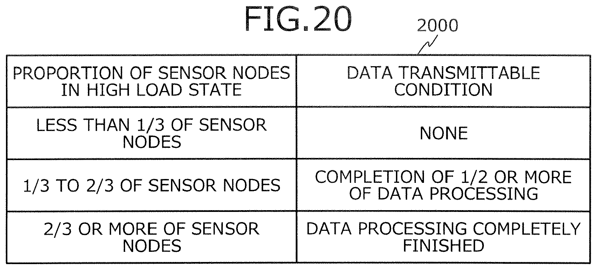

FIG. 20 is an explanatory diagram of a data transmittable condition corresponding to the proportion of the high-load state according to Example 2. Table 2000 represents conditions for data transmission corresponding to the proportion of the sensor nodes 101 in the high-load state among the multiple sensor nodes 101. For example, if the proportion of the sensor nodes 101 in the high-load state among the multiple sensor nodes 101 is less than 1/3, the sensor nodes 101 have no prohibitive condition for data transmission. Therefore, the sensor node 101 may transmit any among the execution result of the data processing, request information for the data processing, and the execution result of the portion of the data processing and request information for the remaining data processing, to the first apparatus directly communicable with the sensor node 101.

For example, if the proportion of the sensor nodes 101 in the high-load state among the multiple sensor nodes 101 is equal to or greater than 1/3 and less than 2/3, each of the sensor nodes 101 executes data processing equal to or greater than 1/2 the data processing. The sensor node 101 can transmit the request information and the execution result in the case of completion of 1/2 or more of the data processing.

For example, if the proportion of the sensor nodes 101 in the high-load state among the multiple sensor nodes 101 is equal to or greater than 2/3, each of the sensor nodes 101 can transmit only the execution result of the entirely completed data processing.

### (Process Procedure Executed by Sensor Node 101 According to Example 2)

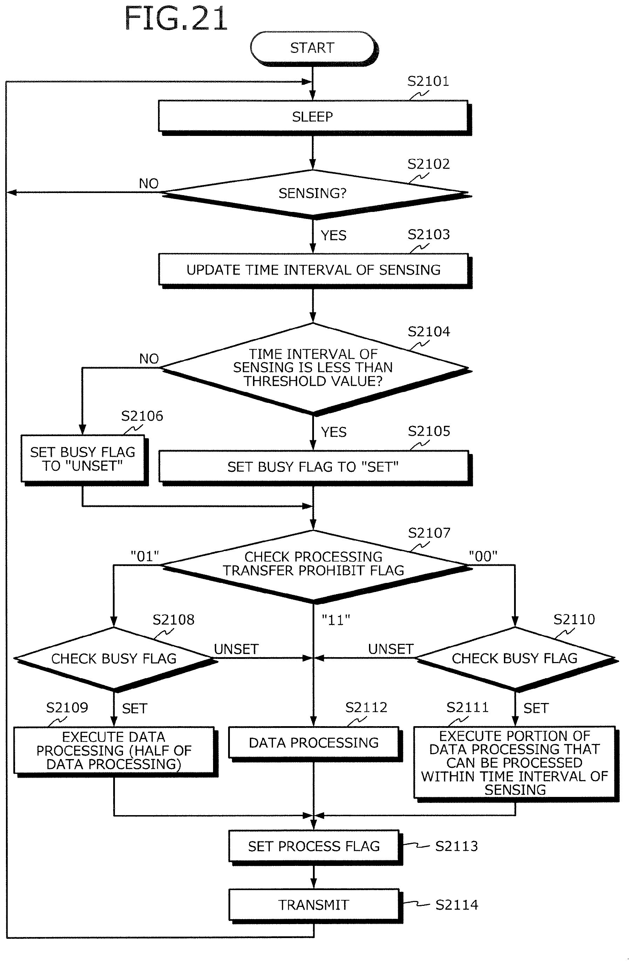

FIG. 21 is a flowchart of an example of a process procedure (part 1) executed by the sensor node according to Example 2. First, the sensor node 101 stands by in a SLEEP state (step S2101) and judges whether an occurrence of the sensing ev is detected (step S2102). If an occurrence of the sensing ev is not detected (step S2102: NO), the sensor node 101 returns to step S2101 and stands by in the SLEEP state.

If an occurrence of the sensing ev is detected (step S2102: YES), the sensor node 101 updates the time interval itv of the sensing ev (step S2103). For example, the sensor node 101 may store an occurrence time of past sensing ev and may calculate the difference between the occurrence time of the last sensing ev and the occurrence time of the newly detected sensing ev to calculate the time interval itv of the sensing ev. For example, the sensor node 101 may calculate the average of the time intervals itv of the past sensing ev.

The sensor node 101 judges whether the time interval itv of the sensing ev is less than a threshold value (step S2104). The threshold value may be the time required for the data processing, for example. This enables the sensor node 101 to judge whether the data processing corresponding to the detected event will finish before the occurrence of an event subsequent to the detected event. If the time interval itv of the sensing ev is less than the threshold value (step S2104: YES), the sensor node 101 sets the busy flag bf to "set" (step S2105). If the time interval itv of the sensing ev is not less than the threshold value (step S2104: NO), the sensor node 101 sets the busy flag bf to "unset" (step S2106).

After step S2105 or step S2106, the sensor node 101 checks the processing transfer prohibit flag tf stored in the storage device 510 (step S2107). If the processing transfer prohibit flag tf is "01" (step S2107: "01"), the sensor node 101 checks the busy flag bf stored in the storage device 510 (step S2108). If the busy flag bf is set (step S2108: SET), the sensor node 101 executes data processing equal to a half of the data processing (step S2109) and sets the process flag pf (step S2113). In this case, the data processing is not entirely completed and therefore, the process flag pf is set to "unset". The sensor node 101 goes to step S2114. If the busy flag bf is unset (step S2108: UNSET), the sensor node 101 goes to step S2112.

If the processing transfer prohibit flag tf is "00" (step S2107: "00"), the sensor node 101 checks the busy flag bf stored in the storage device 510 (step S2110). If the busy flag bf is set (step S2110: SET), the sensor node 101 executes a portion of the data processing that can be processed within the time interval itv of the sensing ev (step S2111) and sets the process flag pf (step S2113). In this case, the data processing is not entirely completed and therefore, the process flag pf is set to "unset". The sensor node 101 transmits the execution result of the portion of the data processing and request information to an apparatus directly communicable with the sensor node 101 (step S2114) and returns to step S2101. If the busy flag bf is unset (step S2110: UNSET), the sensor node 101 goes to step S2112.

If the processing transfer prohibit flag tf is "11" (step S2107: "11"), the sensor node 101 executes all of the data processing (step S2112) and sets the process flag pf (step S2113). In this case, all of the data processing is completed and therefore, the process flag pf is set to "set". The sensor node 101 transmits the execution result to an apparatus directly communicable with the sensor node 101 (step S2114) and returns to step S2101.

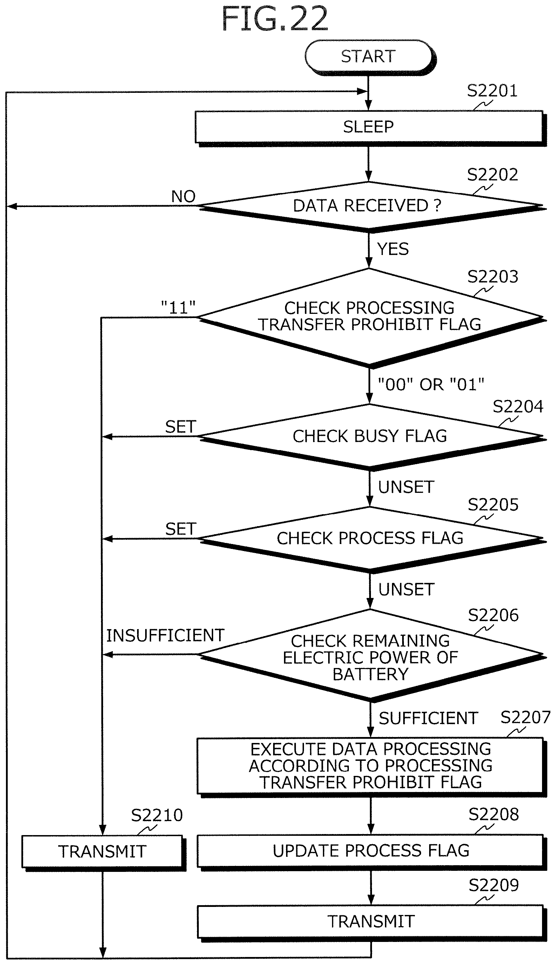

FIG. 22 is a flowchart of an example of a process procedure (part 2) executed by the sensor node according to Example 2. First, the sensor node 101 stands by in the SLEEP state (step S2201) and judges whether data has been received from a neighboring sensor node 101 of the sensor node 101 (step S2202). If data has not been received from a neighboring sensor node 101 of the sensor node 101 (step S2202: NO), the sensor node 101 returns to step S2201 and stands by in the SLEEP state.

If data has been received from a neighboring sensor node 101 of the sensor node 101 (step S2202: YES), the sensor node 101 checks the processing transfer prohibit flag tf stored in the storage device 510 (step S2203). If the processing transfer prohibit flag tf is "11" (step S2203: "11"), the sensor node 101 transmits the received data to the apparatus directly communicable with the sensor node 101 (step S2209). If the processing transfer prohibit flag tf is "00" or "01" (step S2203: "00" OR "01"), the sensor node 101 checks the busy flag bf stored in the storage device 510 (step S2204). If the busy flag bf is set (step S2204: SET), the sensor node 101 goes to step S2209.

If the busy flag bf is unset (step S2204: UNSET), the sensor node 101 checks the process flag pf of the received data (step S2205). If the process flag pf is set to "set" (step S2205: SET), the data processing for the received data has been completed and therefore, the sensor node 101 goes to step S2210.

If the process flag pf is not set to "set" (step S2205: UNSET), the sensor node 101 checks the remaining electric power of the battery 312 (step S2206). In this case, the sensor node 101 estimates the total value of the electric power required for executing the data processing indicated by the received data and the electric power required for transmitting the execution result of the data processing indicated by the received data. The sensor node 101 determines whether the electric power of the battery 312 is sufficient or insufficient based on whether the electric power of the battery 312 is equal to or greater than the total value. For example, if the electric power of the battery 312 is equal to or greater than the total value, the sensor node 101 determines that the electric power is sufficient and if the electric power of the battery 312 is less than the total value, the sensor node 101 determines that the electric power is insufficient.

If the electric power is sufficient (step S2206: SUFFICIENT), according to the processing transfer prohibit flag tf, the sensor node 101 executes the data processing indicated by the received data (step S2207) and updates the process flag pf (step S2208). The sensor node 101 transmits the execution result of the data processing to the apparatus directly communicable with the sensor node 101 (step S2209) and returns to step S2201. On the other hand, if the electric power is insufficient (step S2206: INSUFFICIENT), the sensor node 101 goes to step S2210.

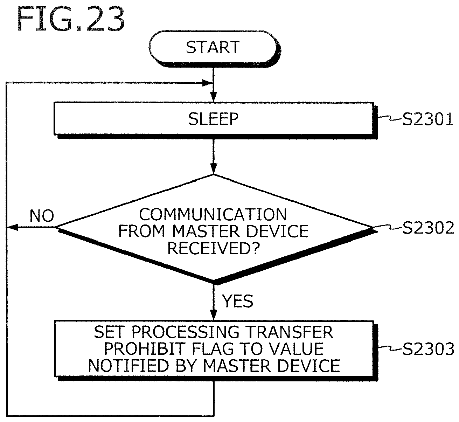

FIG. 23 is a flowchart of an example of a process procedure (part 3) executed by the sensor node according to Example 2. First, the sensor node 101 stands by in the SLEEP state (step S2301) and judges whether communication from the master device 102 has been received (step S2302). If communication from the master device 102 has not been received (step S2302: NO), the sensor node 101 returns to step S2301 and stands by in the SLEEP state.

If communication from the master device 102 has been received (step S2302: YES), the sensor node 101 sets the processing transfer prohibit flag tf to the value notified by the master device 102 (step S2303), and returns to step S2301.

### (Process Procedure Executed by Master Device 102 According to Example 2)

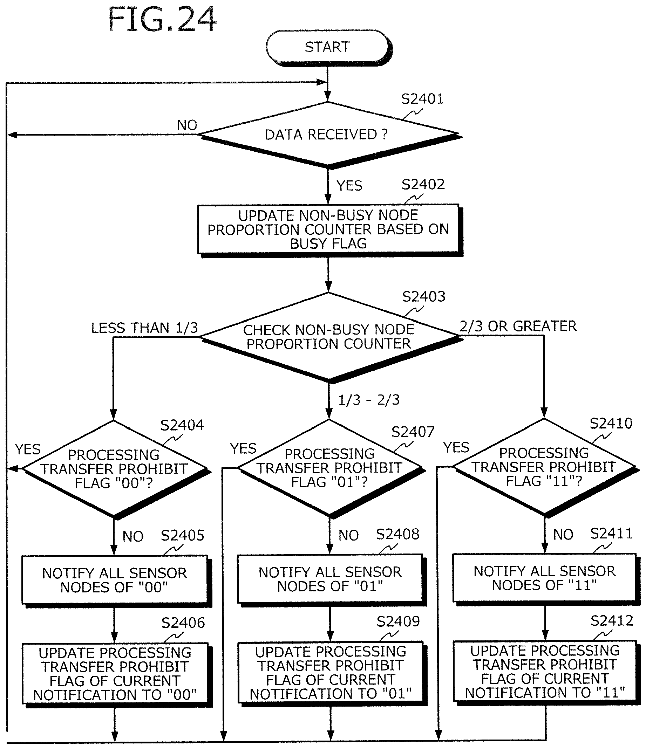

FIG. 24 is a flowchart of an example of a process procedure executed by the master device according to Example 2. First, the master device 102 judges whether data from the sensor node 101 has been received (step S2401). If data from the sensor node 101 has not been received (step S2401: NO), the master device 102 returns to step S2401. If data from the sensor node 101 has been received (step S2401: YES), the master device 102 updates the non-busy node proportion counter ct based on the busy flag bf included in the received data (step S2402). For example, the master device 102 stores the identification information of the sensor node 101 and the busy flag bf included in the received data in a correlated manner. The master device 102 may set the value of the non-busy node proportion counter ct based on the number of the sensor nodes 101 and the number of the unset busy flags bf.

The master device 102 checks the non-busy node proportion counter ct (step S2403). Based on the non-busy node proportion counter ct, if the proportion of the sensor nodes 101 in the high-load state is less than 1/3 (step S2403: LESS THAN 1/3), the master device 102 judges whether the processing transfer prohibit flag tf is "00" (step S2404). If the processing transfer prohibit flag tf is "00" (step S2404: YES), the master device 102 returns to step S2401. If the processing transfer prohibit flag tf is not "00" (step S2404: NO), the master device 102 notifies all the sensor nodes 101 of the processing transfer prohibit flag tf set to "00" (step S2405). The master device 102 updates the processing transfer prohibit flag tf of the current notification to "00" (step S2406) and returns to step S2401.

Based on the non-busy node proportion counter ct, if the proportion of the sensor nodes 101 in the high-load state is equal to or greater than 1/3 and less than 2/3 (step S2403: 1/3 TO 2/3), the master device 102 judges whether the processing transfer prohibit flag tf is "01" (step S2407). If the processing transfer prohibit flag tf is "01" (step S2407: YES), the master device 102 returns to step S2401. If the processing transfer prohibit flag tf is not "01" (step S2407: NO), the master device 102 notifies all the sensor nodes 101 of the processing transfer prohibit flag tf set to "01" (step S2408). The master device 102 updates the processing transfer prohibit flag tf of the current notification to "01" (step S2409) and returns to step S2401.

Based on the non-busy node proportion counter ct, if the proportion of the sensor nodes 101 in the high-load state is equal to or greater than 2/3 (step S2403: 2/3 OR GREATER), the master device 102 judges whether the processing transfer prohibit flag tf is "11" (step S2410). If the processing transfer prohibit flag tf is "11" (step S2410: YES), the master device 102 returns to step S2401. If the processing transfer prohibit flag tf is not "11" (step S2410: NO), the master device 102 notifies all the sensor nodes 101 of the processing transfer prohibit flag tf set to "11" (step S2411). The master device 102 updates the processing transfer prohibit flag tf of the current notification to "11" (step S2412) and returns to step S2401.

### (Example 3)

In Example 3, the amount of data processing executed by a sensing node is classified into n stages depending on the proportion of the sensor nodes 101 in the high-load state. As a result, if a small number of the sensor nodes 101 are in the high-load state, the load of the sensor node 101 in the high-load state can be distributed to another one of the sensor nodes 101. If a large number of the sensor nodes 101 are in the high-load state, unexecuted data processing can be prevented from being transmitted to the master device 102 by reducing the amount of data processing requested to another one of the sensor nodes 101.

If the judging unit 502 outputs judgment information indicating incompletion of the data processing corresponding to the sensing ev, the transmitting unit 504 transmits the judgment information directly, or through another one or more of the sensor nodes 101 among the multiple sensor nodes 101, to the master device 102.

The receiving unit 601 receives the judgment information indicating incompletion of the data processing corresponding to the sensing ev. Based on the reception result of the judgment information indicating incompletion of the data processing corresponding to the sensing ev, the determining unit 602 determines the number of the sensor nodes 101 transmitting the judgment information indicating incompletion of the data processing corresponding to the sensing ev among the multiple sensor nodes 101. The transmitting unit 603 transmits to the multiple sensor nodes 101, information based on the determined number. For example, the information based on the determined number may be the processing transfer prohibit flag tf. In Example 3, the processing transfer prohibit flag tf is assumed to be X-bit data, and is "X>log2(n+1)".

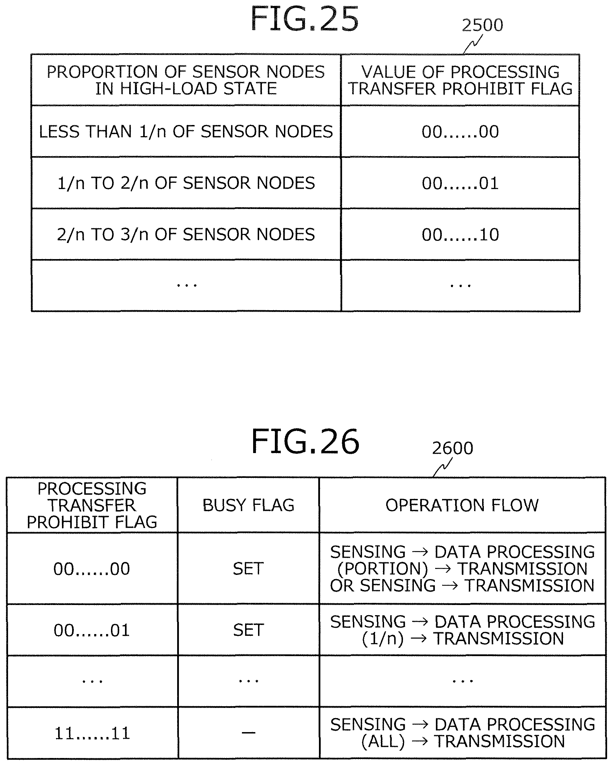

FIG. 25 is an explanatory diagram of a setting example of the processing transfer prohibit flag according to Example 3. Table 2500 represents conditions for data transmission corresponding to the proportion of the sensor nodes 101 in the high-load state among the multiple sensor nodes 101. For example, if the proportion of the sensor nodes 101 in the high-load state among the multiple sensor nodes 101 is less than 1/n, the master device 102 sets all the X bits of the processing transfer prohibit flag tf to "0". For example, if the proportion of the sensor nodes 101 in the high-load state among the multiple sensor nodes 101 is equal to or greater than 1/n and less than 2/n, the master device 102 sets the least significant bit to "1" and all the other bits to "0" in the X-bit processing transfer prohibit flag tf. For example, if the proportion of the sensor nodes 101 in the high-load state among the multiple sensor nodes 101 is equal to or greater than 2/n and less than 3/n, the master device 102 sets the lower bits of the processing transfer prohibit flag tf to "10" in the X-bit processing transfer prohibit flag tf. The master device 102 sets all the other bits to "0" in the X-bit processing transfer prohibit flag tf. For example, if the proportion is equal to or greater than (m-1)/n and less than m/n, the master device 102 sets the lower bits to a binary number (m-1) and the remaining high-order bits to "0" in the X-bit processing transfer prohibit flag tf.

The receiving unit 505 receives information based on the determined number. For example, the receiving unit 505 receives the processing transfer prohibit flag tf from the master device 102.

If the judging unit 502 judges that the corresponding data processing will not finish, the data processing unit 503 executes a portion of the data processing indicated by the information based on the determined number, among the corresponding data processing. The transmitting unit 504 transmits request information and an execution result of the portion of the data processing to the neighboring sensor node 101 of the sensor node 101 thereof. The request information is information causing the first apparatus directly communicable with the sensor node 101 to execute data processing other than the portion of the data processing of the corresponding data processing and to transmit the execution result to the second apparatus directly communicable with the first apparatus.

FIG. 26 is an explanatory diagram of an operation of the sensor node at the time of sensing according to Example 2. Table 2600 represents the operation of the sensor node 101 based on the states of the processing transfer prohibit flag tf and the busy flag bf. For example, if each of the X bits of the processing transfer prohibit flag tf is "0" and the busy flag bf is set, the sensor node 101 performs the sensing ev, the execution of a portion of the data processing, and the transmission in this order. Alternatively, the sensor node 101 performs the sensing ev and the transmission in this order without executing the data processing. For example, the portion of the data processing is of data processing amount that can be processed within the time interval itv of the occurrence of the event.

For example, if the lower two bits of the processing transfer prohibit flag tf are "01", the remaining bits are "0", and the busy flag bf is set, the sensor node 101 performs the sensing ev, the execution of data processing equal to or greater than 1/n of the data processing, and the transmission in this order.

For example, if each of the X bits of the processing transfer prohibit flag tf is "1", the sensor node 101 performs the sensing ev, the execution of all of the data processing, and the transmission in this order regardless of the state of the busy flag bf. In the case of states of the busy flag bf other than those described in Table 2600, the sensor node 101 performs the sensing ev, the execution of all of the data processing, and the transmission in this order.

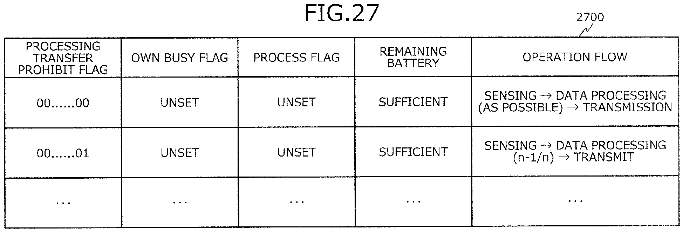

FIG. 27 is an explanatory diagram of an operation of the sensor node at the time of receiving the request information according to Example 3. Table 2700 represents the operation of the sensor node 101 based on the flags and the remaining amount of the battery 312 when relay sensor nodes 101 after a given sensor node 101 and before the master device 120 receive the request information from the given sensor node 101.

For example, all of the bits of the processing transfer prohibit flag tf are "0" while the busy flag bf of the sensor node 101 is unset and the process flag pf of the received request information is unset. In this case, if the remaining amount of the battery 312 is sufficient, the sensor node 101 executes the data processing indicated by the received request information as much as possible (e.g., by referring to the time interval itv of the occurrence of the event). The sensor node 101 transmits to the first apparatus, the execution result and request information that causes the first apparatus directly communicable with the sensor node to execute the data processing excluding the already executed portion of the data processing indicated by the received request information.

For example, the processing transfer prohibit flag tf is assumed to have the least significant bit of "1" and the remaining bits of "0", and the busy flag bf of the sensor node 101 is assumed to be unset. In this case, if the process flag pf of the received request information is unset and the remaining amount of the battery 312 is sufficient, the sensor node 101 executes data processing equal to (n-1)/n of the overall process amount of the data processing indicated by the received request information. The sensor node 101 transmits to the first apparatus directly communicable with the sensor node 101, the execution result and request information for data processing excluding the already executed portion of the data processing indicated by the request information. For example, if (n-1)/n of the received request information is already executed, the sensor node 101 completely executes the data processing indicated by the received request information.

In the case of the flags and the remaining amount of the battery 312 other than those of Table 2700, the sensor node 101 transmits the received request information to the first apparatus directly communicable with the sensor node 101.

### (Process Procedure Executed by Sensor Node 101 According to Example 3)

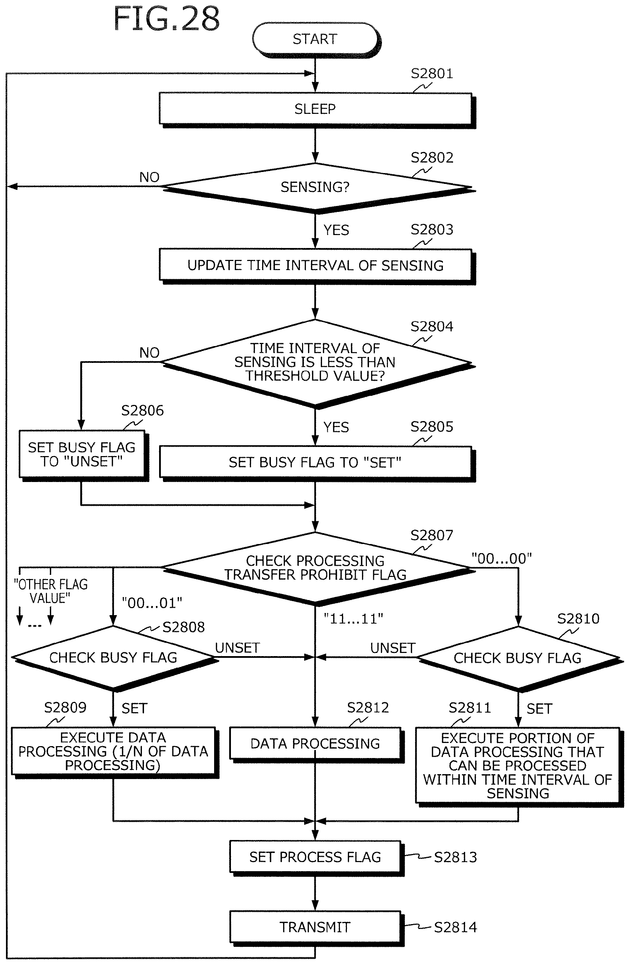

FIG. 28 is a flowchart of an example of a process procedure (part 1) executed by the sensor node according to Example 3. First, the sensor node 101 stands by in a SLEEP state (step S2801) and judges whether an occurrence of the sensing ev is detected (step S2802). If an occurrence of the sensing ev is not detected (step S2802: NO), the sensor node 101 returns to step S2801 and stands by in the SLEEP state.

If an occurrence of the sensing ev is detected (step S2802: YES), the sensor node 101 updates the time interval itv of the sensing ev (step S2803). For example, the sensor node 101 may store an occurrence time of past sensing ev and may calculate the difference between the occurrence time of the last sensing ev and the occurrence time of the newly detected sensing ev to calculate the time interval itv of the sensing ev. For example, the sensor node 101 may calculate the average of the time intervals itv of the past sensing ev.

The sensor node 101 judges whether the time interval itv of the sensing ev is less than a threshold value (step S2804). The threshold value may be the time required for the data processing, for example. This enables the sensor node 101 to judge whether the data processing corresponding to the detected event will finish before the occurrence of an event subsequent to the detected event. If the time interval itv of the sensing ev is less than the threshold value (step S2804: YES), the sensor node 101 sets the busy flag bf to "set" (step S2805). If the time interval itv of the sensing ev is not less than the threshold value (step S2804: NO), the sensor node 101 sets the busy flag bf to "unset" (step S2806).

After step S2805 or step S2806, the sensor node 101 checks the processing transfer prohibit flag tf stored in the storage device 510 (step S2807). If the processing transfer prohibit flag tf is "00...01" (step S2807: "00...01"), the sensor node 101 checks the busy flag bf stored in the storage device 510 (step S2808). If the busy flag bf is set (step S2808: SET), the sensor node 101 executes data processing equal to 1/n of the remaining data processing (step S2809) and sets the process flag pf (step S2813). In this case, the data processing is not entirely completed and therefore, the process flag pf is set to "unset". The sensor node 101 goes to step S2814. If the busy flag bf is unset (step S2808: UNSET), the sensor node 101 goes to step S2812.

Similarly, the amount of the portion of the data processing is determined based on the value of the processing transfer prohibit flag tf.

If all of the bits of the processing transfer prohibit flag tf are "0" (step S2807: "00...00"), the sensor node 101 checks the busy flag bf stored in the storage device 510 (step S2810). If the busy flag bf is set (step S2810: SET), the sensor node 101 executes a portion of the data processing that can be processed within the time interval itv of the sensing ev (step S2811) and sets the process flag pf (step S2813). In this case, the data processing is not entirely completed and therefore, the process flag pf is set to "unset". The sensor node 101 transmits the execution result of the portion of the data processing and request information to an apparatus directly communicable with the sensor node 101 (step S2814) and returns to step S2801. If the busy flag bf is unset (step S2810: UNSET), the sensor node 101 goes to step S2812.

If all of the bits of the processing transfer prohibit flag tf are "1" (step S2807: "11...11"), the sensor node 101 executes all of the data processing (step S2812) and sets the process flag pf (step S2813). In this case, all of the data processing is completed and therefore, the process flag pf is set to "set". The sensor node 101 transmits the execution result to an apparatus directly communicable with the sensor node 101 (step S2814) and returns to step S2801.

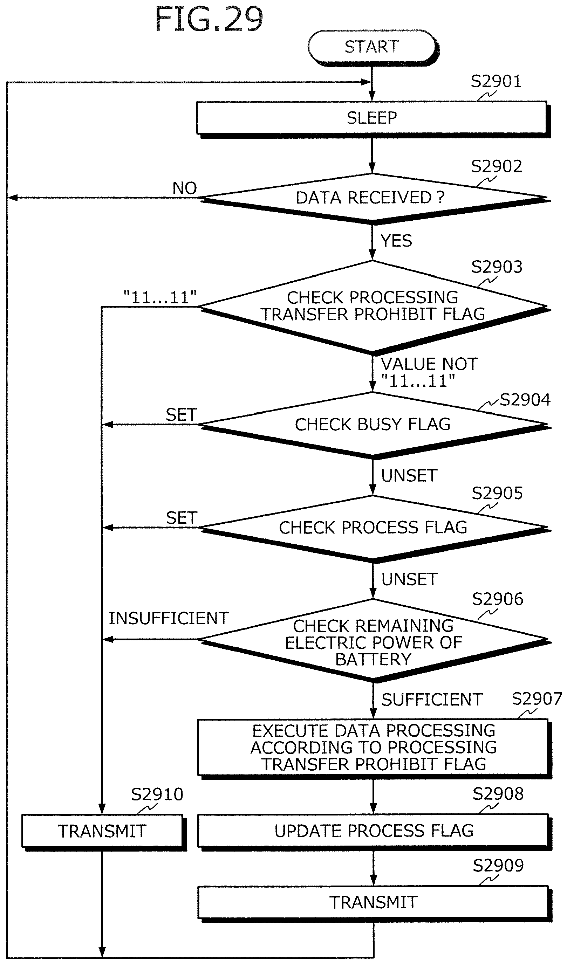

FIG. 29 is a flowchart of an example of a process procedure (part 2) executed by the sensor node according to Example 3. First, the sensor node 101 stands by in the SLEEP state (step S2901) and judges whether data has been received from a neighboring sensor node 101 of the sensor node 101 (step S2902). If data has not been received from a neighboring sensor node 101 of the sensor node 101 (step S2902: NO), the sensor node 101 returns to step S2901 and stands by in the SLEEP state.

If data has been received from a neighboring sensor node 101 of the sensor node 101 (step S2902: YES), the sensor node 101 checks the processing transfer prohibit flag tf stored in the storage device 510 (step S2903). If all of the bits of the processing transfer prohibit flag tf are "1" (step S2903: "11...11"), the sensor node 101 transmits the received data to an apparatus directly communicable with the sensor node 101 (step S2910). If all of the bits of the processing transfer prohibit flag tf are a value other than "1" (step S2903: VALUE NOT "11...11"), the sensor node 101 checks the busy flag bf stored in the storage device 510 (step S2904). If the busy flag bf is set (step S2904: SET), the sensor node 101 goes to step S2910.

If the busy flag bf is unset (step S2904: UNSET), the sensor node 101 checks the process flag pf of the received data (step S2905). If the process flag pf is set to "set" (step S2905: SET), the data processing for the received data has been completed and therefore, the sensor node 101 goes to step S2910. If the process flag pf is not set to "set" (step S2905: UNSET), the sensor node 101 checks the remaining electric power of the battery 312 (step S2906). In this case, the sensor node 101 estimates the total value of the electric power required for executing the data processing indicated by the received data and the electric power required for transmitting the execution result of the data processing indicated by the received data. The sensor node 101 determines whether the electric power of the battery 312 is sufficient or insufficient based on whether the electric power of the battery 312 is equal to or greater than the total value. For example, if the electric power of the battery 312 is equal to or greater than the total value, the sensor node 101 determines that the electric power is sufficient and if the electric power of the battery 312 is less than the total value, the sensor node 101 determines that the electric power is insufficient.

If the electric power is sufficient (step S2906: SUFFICIENT), according to the processing transfer prohibit flag tf, the sensor node 101 executes the data processing indicated by the received data (step S2907) and updates the process flag pf (step S2908). The sensor node 101 transmits the execution result of the data processing to the apparatus directly communicable with the sensor node 101 (step S2909) and returns to step S2901. On the other hand, if the electric power is insufficient (step S2906: INSUFFICIENT), the sensor node 101 goes to step S2910.

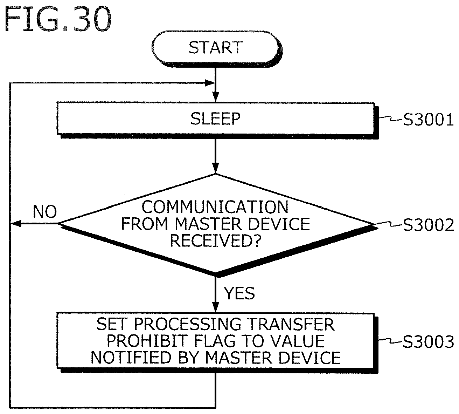

FIG. 30 is a flowchart of an example of a process procedure (part 3) executed by the sensor node according to Example 3. First, the sensor node 101 stands by in the SLEEP state (step S3001) and judges whether communication from the master device 102 has been received (step S3002). If communication from the master device 102 has not been received (step S3002: NO), the sensor node 101 returns to step S3001 and stands by in the SLEEP state.

If communication from the master device 102 has been received (step S3002: YES), the sensor node 101 sets the processing transfer prohibit flag tf to the value notified by the master device 102 (step S3003), and returns to step S3001.

### (Process Procedure Executed by Master Device 102 According to Example 3)

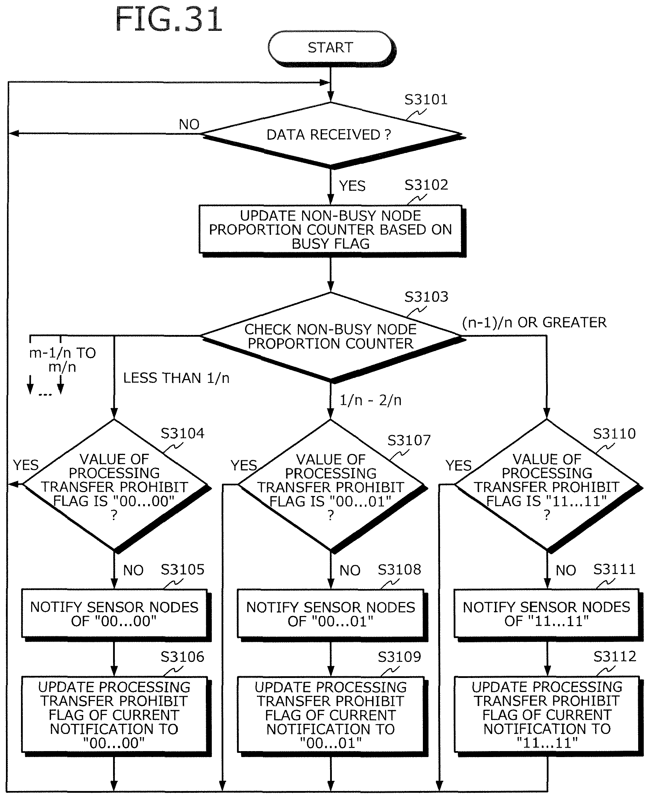

FIG. 31 is a flowchart of an example of a process procedure executed by the master device according to Example 3. First, the master device 102 judges whether data from the sensor node 101 has been received (step S3101). If data from the sensor node 101 has not been received (step S3101: NO), the master device 102 returns to step S3101. If data from the sensor node 101 has been received (step S3101: YES), the master device 102 updates the non-busy node proportion counter ct based on the busy flag bf included in the received data (step S3102). For example, the master device 102 stores the identification information of the sensor node 101 and the busy flag bf included in the received data in a correlated manner. The master device 102 may set the value of the non-busy node proportion counter ct based on the number of the sensor nodes 101 and the number of the unset busy flags bf.

The master device 102 checks the non-busy node proportion counter ct (step S3103). Based on the non-busy node proportion counter ct, if the proportion of the sensor nodes 101 in the high-load state is less than 1/n (step S3103: LESS THAN 1/n), the master device 102 judges whether all of the bits of the processing transfer prohibit flag tf are "0" (step S3104). If all of the bits of the processing transfer prohibit flag tf are "0" (step S3104: YES), the master device 102 returns to step S3101. If all of the bits of the processing transfer prohibit flag tf are not "0" (step S3104: NO), the master device 102 notifies all the sensor nodes 101 of the processing transfer prohibit flag tf whose bits are all set to "0" (step S3105). The master device 102 updates all of the bits of the processing transfer prohibit flag tf of the current notification to "0" (step S3106) and returns to step S3101.

Based on the non-busy node proportion counter ct, if the proportion of the sensor nodes 101 in the high-load state is equal to or greater than 1/3 and less than 2/3 (step S3103: 1/n TO 2/n), the master device 102 judges whether the processing transfer prohibit flag tf is "00...01" (step S3107). If the processing transfer prohibit flag tf is "00...01" (step S3107: YES), the master device 102 returns to step S3101. If the processing transfer prohibit flag tf is not "00...01" (step S3107: NO), the master device 102 notifies all the sensor nodes 101 of the processing transfer prohibit flag tf set to "00...01" (step S3108). The master device 102 updates the processing transfer prohibit flag tf of the current notification to "00...01" (step S3109) and returns to step S3101. In a case where the proportion of the sensor nodes 101 in the high-load state is (m-1)/n to m/n, processing is similarly performed.

Based on the non-busy node proportion counter ct, if the proportion of the sensor nodes 101 in the high-load state is equal to or greater than (n-1)/n (step S3103: (n-1)/n OR GREATER), the master device 102 judges whether all of the bits of the processing transfer prohibit flag tf are "1" (step S3110). If all of the bits of the processing transfer prohibit flag tf are "1" (step S3110: YES), the master device 102 returns to step S3101. If all of the bits of the processing transfer prohibit flag tf are not "1" (step S3110: NO), the master device 102 notifies all the sensor nodes 101 of the processing transfer prohibit flag tf whose bits area all set to "1" (step S3111). The master device 102 updates all of the bits of the processing transfer prohibit flag tf of the current notification to "1" (step S3112) and returns to step S3101.

As described above, according to the communication apparatus, the system, and the communication method, if the event occurrence interval is shorter than the time required for data processing executed at the occurrence of an event, the data processing and the transmission of a processing result is requested to a relay communication apparatus that is after the communication apparatus and before a master device. As a result, the abandonment of the data processing at the occurrence of the event can be reduced. For example, if the master device or a user terminal analyzes the execution results of the data processing in time series, the abandonment of execution of the data processing reduces the analysis accuracy. Therefore, the analysis accuracy can be improved by reducing the number of times that execution of the data processing is abandoned at the occurrence of the event.

For example, in a sensor network system, the event is the sensing. For example, a sensor node acting as a communication apparatus in the sensor network system is equipped with a low-performance processer. Therefore, the sensor node cannot make a large volume of processing wait as in the case of a typical personal computer. Therefore, if the sensing interval is shorter than the time required for data processing, the sensing result is discarded. Moreover, it is difficult for the sensor node to communicate with a distant master device or sensor node through wireless communication. Therefore, the sensing result and the execution result of the data processing are relayed and transferred via another sensor node to the master device. The data processing can be requested to a relay sensor node that is after the sensor node and before the master device. Therefore, the discarding of the sensing results can be reduced.

When receiving request information for data processing, the relay communication apparatus executes the data processing and transmits the execution result. As a result, since the relay sensor node after the sensor node before the master device executes the data processing, the discarding of the sensing results can be reduced.

When not in the high-load state, the relay communication apparatus executes data processing requested from another communication apparatus. Therefore, a communication apparatus in the low-load state is requested to execute the data processing.

For example, each of the sensor nodes of the sensor network system is operated by generated electric power stored by a battery. Therefore, the battery may become exhausted while the requested data processing is executed. If the battery is exhausted during the execution, the results obtained during the execution are wasted. Therefore, if the battery remaining amount is sufficient, the relay communication apparatus executes the data processing requested from another communication apparatus whereas, if the battery remaining amount is insufficient, the relay communication apparatus transmits the request information to another sensor node as is. As a result, the battery can be prevented from becoming exhausted due to the requested data processing.

If the event occurrence interval is shorter than the time required for the data processing executed at the occurrence of the event, the communication apparatus executes a portion of the data processing that can be processed within the occurrence interval and requests a relay communication apparatus that is after the communication apparatus and before the master device to execute the remaining data processing. As a result, the amount of data processing requested to another communication apparatus can be reduced.

When the number of communication apparatuses in the high-load state increases among the communication apparatuses in the system, the master device may receive a large volume of unexecuted data processing. Therefore, if the communication apparatus requests a relay communication apparatus that is after the communication apparatus and before the master device to execute data processing, the communication apparatus informs the master device that the communication apparatus is in the high-load state. If the number of communication apparatuses in the high-load state is equal to or greater than a threshold value, the master device prohibits making a request for data processing to another communication apparatus. As a result, the transmission of a large volume of unexecuted data processing to the master device can be prevented.

If the communication apparatus does not request a relay communication apparatus that is after the communication apparatus and before the master device to execute data processing, the communication apparatus informs the master device that the communication apparatus is in the low-load state. If the number of communication apparatuses in the low-load state is equal to or greater than a threshold value and it is prohibited to make a request for data processing to another communication apparatus, the master device releases the prohibition. As a result, the transmission of unexecuted data processing to the master device can be prevented while the discarding of the data processing can be reduced.

If the communication apparatus requests a relay communication apparatus that is after the communication apparatus and before the master device to execute data processing, the communication apparatus informs the master device that the communication apparatus is in the high-load state. The master device determines the data processing amount that may be requested to another communication apparatus based on the number of the communication apparatuses in the high-load state. As a result, if a small number of the communication apparatuses are in the high-load state, the load of a communication apparatus in the high-load state can be distributed to another communication apparatus. If a large number of the communication apparatuses are in the high-load state, the data processing amount requested to another communication apparatus can be reduced to prevent the transmission of unexecuted data processing to the master device.

### EXPLANATIONS OF LETTERS OR NUMERALS

- 101: sensor node
- 120: master device
- 100: sensor network system
- 303, 407: wireless communication circuit
- 305: MCU
- 312: battery
- 306: RAM
- 307: ROM
- 308: non-volatile memory
- 401: CPU
- 501: detecting unit
- 502: judging unit
- 503: data processing unit
- 504, 603: transmitting unit
- 505, 601: receiving unit
- 506: acquiring unit
- 507, 602: determining unit
- 508: electric storage device
- ev: sensing
- tf: processing transfer prohibit flag
- bf: busy flag
- itv: time interval

## Claims

1. A communication apparatus (101) comprising:
a detecting unit (501) configured to detect an occurrence of an event, the detecting unit having also detected one or more previous occurrences of the event;
a judging unit (502) configured to determine whether either a time interval between the occurrence of the event and the preceding occurrence of the event, or an average value of time intervals between detected occurrences of the event and their respective preceding occurrences, is less than or equal to a stored threshold value, and if so, to output judgment information indicating that data processing corresponding to the event detected by the detecting unit (501) will not finish before an occurrence of an event subsequent to the detected event, and if not, to output judgment information indicating that the data processing corresponding to the event detected by the detecting unit will finish before an occurrence of an event subsequent to the detected event;
a data processing unit (503) configured, when the judgment information indicating completion is output by the judging unit, to execute the corresponding data processing; and
a transmitting unit (504) configured, when the judgment information indicating completion is output by the judging unit, to transmit an execution result that is of the executed corresponding data processing and obtained by a data processing unit (503), to a first apparatus that is communicable with the communication apparatus, the transmitting unit (504) configured, when the judgment information indicating incompletion is output by the judging unit, to transmit to the first apparatus, request information causing the first apparatus to execute the corresponding data processing and to transmit an execution result of the corresponding data processing to a second apparatus communicable with the first apparatus.

2. The communication apparatus according to claim 1, further comprising
a receiving unit (505) configured to receive from the first apparatus, first request information causing the communication apparatus to execute data processing corresponding to an event detected by the first apparatus and to transmit an execution result of the corresponding data processing to another first apparatus, wherein
the data processing unit (503) is configured to execute the data processing indicated by the first request information, and
the transmitting unit (504) is configured to transmit to the another first apparatus, an execution result obtained by the data processing unit (503).

3. The communication apparatus according to claim 2, further comprising
a storage device (510) configured to store information, wherein
the judging unit (502) is configured to write the judgment information into the storage device (510),
the data processing unit (503) is configured to refrain from executing the data processing indicated by the first request information, when the judgment information stored in the storage device (510) indicates incompletion of the corresponding data processing, and
the transmitting unit (504) is configured to transmit the first request information to another first apparatus, when the judgment information stored in the storage device (510) indicates incompletion of the corresponding data processing.

4. The communication apparatus according to claim 2 or 3, further comprising
an electric storage device (508) configured to store electric power supplied to the communication apparatus;
an acquiring unit (506) configured to acquire total electric power of power required for the data processing indicted by the first request information and power required for transmission of an execution result of the data processing indicated by the request information; and
a determining unit (507) configured to output a determination signal indicating whether the electric power stored by the electric storage device (508) is at least equal to the total electric power, wherein
the data processing unit (503) is configured to execute the data processing indicated by the first request information, when the determination signal input indicates the stored electric power to be equal to or greater than the total electric power, and the data processing unit (503) is configured to refrain from executing the data processing indicated by the first request information received by the receiving unit (505), when the determination signal input indicates the stored electric power to be less than the total electric power, and
the transmitting unit (504) is configured to transmit to the first apparatus, an execution result obtained by the data processing unit (503), the transmitting unit (504) being configured to transmit the execution result when the determination signal input indicates the stored electric power to be equal to or greater than the total electric power, and to transmit the first request information to the first apparatus, when the determination signal input indicates the stored electric power to be less than the total electric power.

5. The communication apparatus according to any one of claims 1 to 4, wherein
the data processing unit (503) is configured to execute a portion of the corresponding data process, when the judgment information input indicates incompletion of the corresponding data processing, and
the transmitting unit (504) is configured to transmit to the first apparatus, an execution result that is of the portion of the data processing and obtained by the data processing unit (503) and second request information causing the first apparatus to execute data processing of the corresponding data processing, excluding the portion of the data processing and to transmit an execution result of the corresponding data processing to the second apparatus.

6. A system (100) comprising:
a plurality of first communication apparatuses (101) according to claim 1; and a second communication apparatus (102) that is configured to:
receive from a first apparatus that is among the plurality of first communication apparatuses (101) and communicable with the second communication apparatus, the execution result of the corresponding data processing transmitted from the plurality of first communication apparatuses (101); and
execute data processing based on the received execution result; wherein
the plurality of first communication apparatuses (101) are respectively configured to transmit the judgment information indicating incompletion of the corresponding data processing to the second communication apparatus directly, or via another first communication apparatus among the plurality of first communication apparatuses (101),
the second communication apparatus (102) being configured to:
receive the judgment information indicating incompletion of the corresponding data processing,
determine whether the judgment information indicating incompletion of the corresponding data processing has been received from a predetermined number, or more, of first communication apparatuses among the plurality of first communication apparatuses (101), and
when determining that the judgment information indicating incompletion of the corresponding data processing has been received from the predetermined number, or more, of the first communication apparatuses, to transmit to the plurality of first communication apparatuses (101), requirement information establishing a request prohibit state in which transmission of the request information to a neighboring apparatus communicable with the first communication apparatus is not allowed even when the first communication apparatus judges that the corresponding data processing will not finish.

7. The system (100) according to claim 6, wherein
the plurality of first communication apparatuses (101) are respectively configured to transmit the judgment information indicating completion of the corresponding data processing to the second communication apparatus (102) directly, or via another first communication apparatus among the plurality of first communication apparatuses (101),
the second communication apparatus (102) being configured to:
receive the judgment information indicating completion of the corresponding data processing,
determine whether the judgment information indicating completion of the corresponding data processing has been received from a predetermined number, or more, of first communication apparatuses among the plurality of first communication apparatuses (101), and
when determining that the judgment information indicating completion of the corresponding data processing has been received from the predetermined number, or more, of the first communication apparatuses, transmit to the plurality of first communication apparatuses (101), requirement information releasing the request prohibit state.

8. The system (100) according to claim 6, wherein
the plurality of first communication apparatuses (101) are respectively configured to transmit the judgment information indicating incompletion of the corresponding data processing to the second communication apparatus (102) directly, or via another fist communication apparatus among the multiple first communication apparatuses,
the second communication apparatus (102) being configured to:
receive the judgment information indicating incompletion of the corresponding data processing,
determine based on receipt of the judgment information indicating incompletion of the corresponding data processing, the number of first communication apparatuses transmitting the judgment information indicating incompletion of the corresponding data processing among the plurality of first communication apparatuses (101),
transmit to the plurality of first communication apparatuses (101), determination information based on the determined number,
the plurality of first communication apparatuses (101) are respectively configured to:
receive the determination information,
execute a portion of the corresponding data processing of a proportion based on the determination information, when determining that the corresponding data processing will not finish, and
transmit to the first apparatus, an execution result of the portion of the corresponding data processing and request information causing the first apparatus to execute data processing other than the portion of the corresponding data processing and to transmit to the second apparatus, an execution result of the corresponding data processing.

9. A communication method of a communication apparatus (101) and comprising:
the communication apparatus:
detecting an occurrence of an event, having also detected one or more previous occurrences of the event;
determining whether either a time interval between the occurrence of the event and the preceding occurrence of the event, or an average value of time intervals between detected occurrences of the event and their respective preceding occurrences, is less than or equal to a stored threshold value, and if so, outputting judgment information indicating that data processing corresponding to the detected event will not finish before an occurrence of an event subsequent to the detected event, and if not, outputting judgment information indicating that the data processing corresponding to the event detected by the detecting unit will finish before an occurrence of an event subsequent to the detected event;
when the judgment information input indicates completion of the corresponding data processing, executing the corresponding data processing, and transmitting to a first apparatus that is communicable therewith, an execution result that is of the corresponding data processing, and
and when the judgment information input indicates incompletion of the corresponding data processing, transmitting to the first apparatus, request information causing the first apparatus to execute the corresponding data processing and to transmit an execution result of the corresponding data processing to a second apparatus communicable with the first apparatus.

## Patentansprüche

1. Kommunikationsvorrichtung (101), umfassend:
eine Erkennungseinheit (501), konfiguriert zur Erkennung eines Vorkommens eines Ereignisses, wobei die Erkennungseinheit auch ein oder mehrere vorherige Vorkommen des Ereignisses erkannt hat;
eine Beurteilungseinheit (502), konfiguriert zur Bestimmung, ob entweder ein Zeitintervall zwischen dem Vorkommen des Ereignisses und dem vorherigen Vorkommen des Ereignisses, oder ein Durchschnittswert der Zeitintervalle zwischen erkannten Vorkommen des Ereignisses und deren jeweiligen vorherigen Vorkommen, weniger oder gleich eines gespeicherten Grenzwerts ist, und wenn ja, Ausgabe einer Urteilsinformation, die anzeigt, dass eine Datenverarbeitung, die dem Ereignis entspricht, das durch die Erkennungseinheit (501) erkannt wird, nicht abgeschlossen wird, bevor ein Ereignis auftritt, das nach dem erkannten Ereignis eintritt, und wenn nicht, Ausgabe einer Urteilsinformation, die anzeigt, dass die Datenverarbeitung, die dem Ereignis entspricht, das durch die Erkennungseinheit erkannt wird, abgeschlossen wird, bevor ein Ereignis auftritt, das nach dem erkannten Ereignis eintritt;
Datenverarbeitungseinheit (503), konfiguriert, um, wenn die den Abschluss anzeigende Urteilsinformation durch die Beurteilungseinheit ausgegeben wird, die jeweilige Datenverarbeitung auszuführen; und
eine Übermittlungseinheit (504), die konfiguriert ist, um, wenn die den Abschluss anzeigende Urteilsinformation durch die Beurteilungseinheit ausgegeben wird, ein Ausführungsergebnis, das der ausgeführten entsprechenden Datenverarbeitung entspricht und durch eine Datenverarbeitungseinheit (503) erhalten wird, an eine erste Vorrichtung zu übermitteln, die mit der Kommunikationsvorrichtung kommunizieren kann, wobei die Übermittlungseinheit (504) konfiguriert ist, wenn die den fehlenden Abschluss anzeigende Urteilsinformation durch die Beurteilungseinheit ausgegeben wird, an die erste Vorrichtung eine Anfrageinformation zu übermitteln, die dazu führen, dass die erste Vorrichtung die entsprechende Datenverarbeitung ausführt und ein Ausführungsergebnis der jeweiligen Datenverarbeitung an eine zweite Vorrichtung übermittelt, die mit der ersten Vorrichtung kommunizieren kann.

2. Kommunikationsvorrichtung nach Anspruch 1, ferner umfassend
eine Empfangseinheit (505), konfiguriert, um von der ersten Vorrichtung eine erste Anfrageinformation zu empfangen, die dazu führt, dass die Kommunikationsvorrichtung die Datenverarbeitung einem Ereignis entsprechend ausführt, das durch die erste Vorrichtung erkannt wird, und ein Ausführungsergebnis der jeweiligen Datenverarbeitung an eine andere erste Vorrichtung übermittelt, wobei
die Datenverarbeitungseinheit (503) konfiguriert ist, um die Datenverarbeitung auszuführen, die durch die erste Anfrageinformation angezeigt wird, und
die Übermittlungseinheit (504) konfiguriert ist, um an die andere erste Vorrichtung ein Ausführungsergebnis zu übermitteln, das von der Datenverarbeitungseinheit (503) erhalten wird.

3. Kommunikationsvorrichtung nach Anspruch 2, ferner umfassend
Speichervorrichtung (510), konfiguriert, um Informationen zu speichern, wobei
die Beurteilungseinheit (502) konfiguriert ist, um die Urteilsinformation in die Speichervorrichtung (510) zu schreiben,
die Datenverarbeitungseinheit (503) konfiguriert ist, um die Datenverarbeitung, die durch die erste Anfrageinformation angezeigt wird, nicht auszuführen, wenn die in der Speichervorrichtung (510) gespeicherte Urteilsinformation den fehlenden Abschluss der jeweiligen Datenverarbeitung anzeigt, und
die Übermittlungseinheit (504) konfiguriert ist, um die erste Anfrageinformation an eine andere erste Vorrichtung zu übermitteln, wenn die in der Speichervorrichtung (510) gespeicherte Urteilsinformation den fehlenden Abschluss der jeweiligen Datenverarbeitung anzeigt.

4. Kommunikationsvorrichtung nach Anspruch 2 oder 3, ferner umfassend ei
ne elektrische Speichervorrichtung (508), die konfiguriert ist, um elektrische Leistung zu speichern, mit der die Kommunikationsvorrichtung versorgt wird;
eine Abrufeinheit (506), die konfiguriert ist, um die gesamte elektrische Leistung der Leistung, die für die Datenverarbeitung erforderlich ist und durch die erste Anfrageinformation angezeigt werden, und der Leistung, die für die Übermittlung eines Ausführungsergebnisses der Datenverarbeitung erforderlich ist, die durch die Anfrageinformation angezeigt wird, abzurufen; und
eine Bestimmungseinheit (507), die konfiguriert ist, um ein Bestimmungssignal auszugeben, das angibt, ob die elektrische Leistung, die durch die elektrische Speichervorrichtung (508) gespeichert ist, wenigstes der gesamten elektrischen Leistung entspricht, wobei di
e Datenverarbeitungseinheit (503) konfiguriert ist, um die Datenverarbeitung auszuführen, die durch die erste Anfrageinformation angezeigt wird, wenn der Bestimmungssignaleingang die gespeicherte elektrische Leistung anzeigt, die gleich oder größer der gesamten elektrischen Leistung ist, und die Datenverarbeitungseinheit (503) konfiguriert ist, um die Ausführung der Datenverarbeitung, die durch die erste Anfrageinformation, die von der Empfangseinheit (505) erhalten wird, angezeigt wird, zu verhindern, wenn der Bestimmungssignaleingang anzeigt, das die gespeicherte elektrische Leistung geringer ist, als die gesamte elektrische Leistung, und
die Übermittlungseinheit (504) konfiguriert ist, um ein Ausführungsergebnis, das durch die Datenverarbeitungseinheit (503) erhalten wurde, an die erste Vorrichtung zu übermitteln, und die Übermittlungseinheit (504) konfiguriert ist, um das Ausführungsergebnis zu übermitteln, wenn der Bestimmungssignaleingang anzeigt, dass die gespeicherte elektrische Leistung gleich oder größer der gesamten elektrischen Leistung ist, und die erste Anfrageinformation an die erste Vorrichtung zu übermitteln, wenn der Bestimmungssignaleingang anzeigt, dass die gespeicherte elektrische Leistung geringer ist, als die gesamt elektrische Leistung.

5. Kommunikationsvorrichtung nach einem der Ansprüche 1 bis 4, wobei di
e Datenverarbeitungseinheit (503) konfiguriert ist, um einen Teil des jeweiligen Datenprozesses auszuführen, wenn der Urteilsinformationseingang anzeigt, dass die jeweilige Datenverarbeitung nicht abgeschlossen wurde, und
die Übermittlungseinheit (504) konfiguriert ist, um ein Ausführungsergebnis an die erste Vorrichtung zu übermitteln, das zu dem Abschnitt der Datenverarbeitung gehört und durch die Datenverarbeitungseinheit (503) abgerufen wird, und eine zweite Anfrageinformation, die dazu führt, dass die erste Vorrichtung die Datenverarbeitung der jeweiligen Datenverarbeitung ausführt, unter Ausschluss des Abschnitts der Datenverarbeitung, und ein Ausführungsergebnis der jeweiligen Datenverarbeitung an eine zweite Vorrichtung zu übermitteln.

6. System (100), umfassend:
mehrere erste Kommunikationsvorrichtungen (101) nach Anspruch 1
und
eine zweite Kommunikationsvorrichtung (102), die konfiguriert ist, um:
von einer ersten Vorrichtung, die sich unter den mehreren ersten Kommunikationsvorrichtungen (101) befindet und mit der zweiten Kommunikationsvorrichtung kommunizieren kann, das Ausführungsergebnis der jeweiligen Datenverarbeitung zu empfangen, das von den mehreren ersten Kommunikationsvorrichtungen (101) übermittelt wurde; und
die Datenverarbeitung auf Grundlage des empfangenen Ausführungsergebnisses auszuführen; wobei
die mehreren ersten Kommunikationsvorrichtungen (101) jeweils konfiguriert sind, um die den fehlenden Abschluss der jeweiligen Datenverarbeitung anzeigende Urteilsinformation an die zweite Kommunikationsvorrichtung direkt oder über eine andere erste Kommunikationsvorrichtung unter den mehreren ersten Kommunikationsvorrichtungen (101) zu übermitteln,
die zweite Kommunikationsvorrichtung (102) konfiguriert ist, um:
die den fehlenden Abschluss der jeweiligen Datenverarbeitung anzeigende Urteilsinformation von zu empfangen,
zu bestimmen, ob die den fehlenden Abschluss der jeweiligen Datenverarbeitung anzeigende Urteilsinformation von einer vorgegebenen Anzahl oder mehr der ersten Kommunikationsvorrichtungen unter den mehreren ersten Kommunikationsvorrichtungen (101) empfangen wurde, und
bei Feststellung, dass die den fehlenden Abschluss der jeweiligen Datenverarbeitung anzeigende Urteilsinformation von der vorgegebenen Anzahl, oder mehr, der ersten Kommunikationsvorrichtungen empfangen wurde, Übermittlung der Anforderungsinformation, die einen Anfrageverbotszustand einrichten, in dem die Übermittlung der Anfrageinformation an eine benachbarte Vorrichtung, die mit der ersten Kommunikationsvorrichtung kommunizieren kann, nicht zulässig ist, auch, wenn die erste Kommunikationsvorrichtung zu dem Schluss kommt, dass die jeweilige Datenverarbeitung nicht abgeschlossen wird, an die mehreren ersten Kommunikationsvorrichtungen (101).

7. System (100) nach Anspruch 6, wobei
die mehreren ersten Kommunikationsvorrichtungen (101) jeweils konfiguriert sind, um die den Abschluss der jeweiligen Datenverarbeitung anzeigende Urteilsinformation an die zweite Kommunikationsvorrichtung (102) direkt oder über eine andere erste Kommunikationsvorrichtung unter den mehreren ersten Kommunikationsvorrichtungen (101) zu übermitteln,
die zweite Kommunikationsvorrichtung (102) konfiguriert ist, um:
die den Abschluss der jeweiligen Datenverarbeitung anzeigende Urteilsinformation zu empfangen,
zu bestimmen, ob die den Abschluss der jeweiligen Datenverarbeitung anzeigende Urteilsinformation von einer vorgegebenen Anzahl oder mehr der ersten Kommunikationsvorrichtungen unter den mehreren ersten Kommunikationsvorrichtungen (101) empfangen wurde, und
bei der Bestimmung, dass die den Abschluss der jeweiligen Datenverarbeitung anzeigende Urteilsinformation von der vorgegebenen Anzahl oder mehr der ersten Kommunikationsvorrichtungen empfangen wurde, Übermittlung der Anforderungsinformation, die den Anfrageverhinderungszustand aufhebt, an die mehreren ersten Kommunikationsvorrichtungen (101).

8. System (100) nach Anspruch 6, wobei
die mehreren ersten Kommunikationsvorrichtungen (101) jeweils konfiguriert sind, um die den fehlenden Abschluss der jeweiligen Datenverarbeitung anzeigende Urteilsinformation an die zweite Kommunikationsvorrichtung (102) direkt oder über eine andere erste Kommunikationsvorrichtung unter den mehreren ersten Kommunikationsvorrichtungen zu übermitteln,
die zweite Kommunikationsvorrichtung (102) konfiguriert ist, um:
die den fehlenden Abschluss der jeweiligen Datenverarbeitung anzeigende Urteilsinformation von zu empfangen,
auf Grundlage des Eingangs der den fehlenden Abschluss der jeweiligen Datenverarbeitung anzeigenden Urteilsinformation die Anzahl der ersten Kommunikationsvorrichtungen zu bestimmen, die die den fehlende Abschluss der jeweiligen Datenverarbeitung anzeigenden Urteilsinformation unter den mehreren ersten Kommunikationsvorrichtungen (101) übermitteln,
an die mehreren ersten Kommunikationsvorrichtungen (101) Bestimmungsinformationen zu übermitteln, die auf der bestimmten Anzahl basieren,
die mehreren ersten Kommunikationsvorrichtungen (101) sind jeweils konfiguriert, um:
die Bestimmungsinformation zu empfangen,
einen Abschnitt der jeweiligen Datenverarbeitung eines Anteils auszuführen, der auf der Bestimmungsinformation basiert, wenn bestimmt wird, dass die jeweilige Datenverarbeitung nicht abgeschlossen wird, und
an die erste Vorrichtung ein Ausführungsergebnis des Abschnitts der jeweiligen Datenverarbeitung und Anfrageinformation zu übermitteln, sodass die erste Vorrichtung eine andere Datenverarbeitung ausführt, als den Abschnitt der jeweiligen Datenverarbeitung, und ein Ausführungsergebnis der jeweiligen Datenverarbeitung an die zweite Vorrichtung übermittelt.

9. Kommunikationsverfahren einer Kommunikationsvorrichtung (101) und umfassend:
die Kommunikationsvorrichtung:
Erkennung eines Vorkommens eines Ereignisses, nachdem auch ein oder mehrere vorherige Vorkommen des Ereignisses erkannt wurden;
Bestimmung, ob entweder ein Zeitintervall zwischen dem Vorkommen des Ereignisses und dem vorherigen Vorkommen des Ereignisses, oder ein Durchschnittswert der Zeitintervalle zwischen erkannten Vorkommen des Ereignisses und deren jeweiligen vorherigen Vorkommen, weniger oder gleich eines gespeicherten Grenzwerts ist, und wenn ja, Ausgabe einer Urteilsinformation, die anzeigt, dass eine Datenverarbeitung, die dem erkannten Ereignis entspricht, nicht abgeschlossen wird, bevor ein Ereignis auftritt, das nach dem erkannten Ereignis eintritt, und wenn nicht, Ausgabe einer Urteilsinformation, die anzeigt, dass die Datenverarbeitung, die dem Ereignis entspricht, das durch die Erkennungseinheit erkannt wird, abgeschlossen wird, bevor ein Ereignis auftritt, das nach dem erkannten Ereignis eintritt;
wenn der Urteilsinformationseingang den Abschluss der jeweiligen Datenverarbeitung anzeigt, Ausführung der jeweiligen Datenverarbeitung und Übermittlung eines Ausführungsergebnisses, das zu der entsprechenden Datenverarbeitung gehört, an eine erste Vorrichtung, die damit kommunizieren kann, und wenn der Urteilsinformationseingang anzeigt, dass die jeweilige Datenverarbeitung nicht abgeschlossen ist, Übermittlung einer Anfrageinformation an die erste Vorrichtung, wodurch die erste Vorrichtung die jeweilige Datenverarbeitung ausführt und Übermittlung eines Ausführungsergebnisses der jeweiligen Datenverarbeitung an eine zweite Vorrichtung, die mit der ersten Vorrichtung kommunizieren kann.

## Revendications

1. Appareil de communication (101) comprenant :
une unité de détection (501) configurée de manière à détecter une occurrence d'un événement, l'unité de détection ayant également détecté une ou plusieurs occurrences précédentes de l'événement ;
une unité de jugement (502) configurée de manière à déterminer si, soit un intervalle de temps entre l'occurrence de l'événement et l'occurrence précédente de l'événement, soit une valeur moyenne d'intervalles de temps entre des occurrences détectées de l'événement et leurs occurrences précédentes respectives, est inférieur (e) ou égal (e) à une valeur de seuil stockée, et le cas échéant, à fournir en sortie des informations de jugement indiquant qu'un traitement de données correspondant à l'événement détecté par l'unité de détection (501) ne s'achèvera pas avant une occurrence d'un événement subséquent à l'événement détecté, et sinon, à fournir en sortie des informations de jugement indiquant que le traitement de données correspondant à l'événement détecté par l'unité de détection s'achèvera avant une occurrence d'un événement subséquent à l'événement détecté ;
une unité de traitement de données (503) configurée de manière à, lorsque les informations de jugement indiquant l'achèvement sont fournies en sortie par l'unité de jugement, exécuter le traitement de données correspondant ; et
une unité de transmission (504) configurée de manière à, lorsque les informations de jugement indiquant l'achèvement sont fournies en sortie par l'unité de jugement, transmettre un résultat d'exécution qui correspond au traitement de données correspondant exécuté et obtenu par une unité de traitement de données (503), à un premier appareil qui est en mesure de communiquer avec l'appareil de communication, l'unité de transmission (504) étant configurée, lorsque les informations de jugement indiquant un inachèvement sont fournies en sortie par l'unité de jugement, de manière à transmettre, au premier appareil, des informations de demande amenant le premier appareil à exécuter le traitement de données correspondant et à transmettre un résultat d'exécution du traitement de données correspondant à un second appareil en mesure de communiquer avec le premier appareil.

2. Appareil de communication selon la revendication 1, comprenant en outre :
une unité de réception (505) configurée de manière à recevoir, en provenance du premier appareil, des premières informations de demande amenant l'appareil de communication à exécuter un traitement de données correspondant à un événement détecté par le premier appareil, et à transmettre un résultat d'exécution du traitement de données correspondant à un autre premier appareil, dans lequel :
l'unité de traitement de données (503) est configurée de manière à exécuter le traitement de données indiqué par les premières informations de demande ; et
l'unité de transmission (504) est configurée de manière à transmettre, à l'autre premier appareil, un résultat d'exécution obtenu par l'unité de traitement de données (503).

3. Appareil de communication selon la revendication 2, comprenant en outre :
un dispositif de stockage (510) configuré de manière à stocker des informations, dans lequel :
l'unité de jugement (502) est configurée de manière à écrire les informations de jugement dans le dispositif de stockage (510) ;
l'unité de traitement de données (503) est configurée de manière à s'abstenir d'exécuter le traitement de données indiqué par les premières informations de demande, lorsque les informations de jugement stockées dans le dispositif de stockage (510) indiquent un inachèvement du traitement de données correspondant ; et
l'unité de transmission (504) est configurée de manière à transmettre les premières informations de demande à un autre premier appareil, lorsque les informations de jugement stockées dans le dispositif de stockage (510) indiquent un inachèvement du traitement de données correspondant.

4. Appareil de communication selon la revendication 2 ou 3, comprenant en outre :
un dispositif de stockage électrique (508) configuré de manière à stocker de la puissance électrique fournie à l'appareil de communication ;
une unité d'acquisition (506) configurée de manière à acquérir une puissance électrique totale de la puissance requise pour le traitement de données indiqué par les premières informations de demande et de la puissance requise pour la transmission d'un résultat d'exécution du traitement de données indiqué par les informations de demande ; et
une unité de détermination (507) configurée de manière à fournir en sortie un signal de détermination indiquant si la puissance électrique stockée par le dispositif de stockage électrique (508) est au moins égale à la puissance électrique totale, dans lequel :
l'unité de traitement de données (503) est configurée de manière à exécuter le traitement de données indiqué par les premières informations de demande, lorsque l'entrée de signal de détermination indique que la puissance électrique stockée est égale ou supérieure à la puissance électrique totale, et l'unité de traitement de données (503) est configurée de manière à s'abstenir d'exécuter le traitement de données indiqué par les premières informations de demande reçues par l'unité de réception (505), lorsque l'entrée de signal de détermination indique que la puissance électrique stockée est inférieure à la puissance électrique totale ; et
l'unité de transmission (504) est configurée de manière à transmettre, au premier appareil, un résultat d'exécution obtenu par l'unité de traitement de données (503), l'unité de transmission (504) étant configurée de manière à transmettre le résultat d'exécution lorsque l'entrée de signal de détermination indique que la puissance électrique stockée est égale ou supérieure à la puissance électrique totale, et à transmettre les premières informations de demande, au premier appareil, lorsque l'entrée de signal de détermination indique que la puissance électrique stockée est inférieure à la puissance électrique totale.

5. Appareil de communication selon l'une quelconque des revendications 1 à 4, dans lequel :
l'unité de traitement de données (503) est configurée de manière à exécuter une partie du traitement de données correspondant, lorsque l'entrée d'informations de jugement indique l'inachèvement du traitement de données correspondant ; et
l'unité de transmission (504) est configurée de manière à transmettre, au premier appareil, un résultat d'exécution qui correspond à la partie du traitement de données et qui est obtenu par l'unité de traitement de données (503), et des secondes informations de demande amenant le premier appareil à exécuter le traitement de données du traitement de données correspondant, à l'exclusion de la partie du traitement de données, et à transmettre un résultat d'exécution du traitement de données correspondant au second appareil.

6. Système (100) comprenant :
une pluralité de premiers appareils de communication (101) selon la revendication 1 ; et
un second appareil de communication (102) qui est configuré de manière à :
recevoir, en provenance d'un premier appareil qui fait partie de la pluralité de premiers appareils de communication (101) et qui est en mesure de communiquer avec le second appareil de communication, le résultat d'exécution du traitement de données correspondant transmis à partir de la pluralité de premiers appareils de communication (101) ; et
exécuter le traitement de données sur la base du résultat d'exécution reçu ; dans lequel
les appareils de la pluralité de premiers appareils de communication (101) sont respectivement configurés de manière à transmettre les informations de jugement indiquant l'inachèvement du traitement de données correspondant, au second appareil de communication, directement, ou par l'intermédiaire d'un autre premier appareil de communication parmi la pluralité de premiers appareils de communication (101) ;
le second appareil de communication (102) étant configuré de manière à :
recevoir les informations de jugement indiquant l'inachèvement du traitement de données correspondant ;
déterminer si les informations de jugement indiquant l'inachèvement du traitement de données correspondant ont été reçues en provenance d'un nombre prédéterminé, ou plus, de premiers appareils de communication parmi la pluralité de premiers appareils de communication (101) ; et
lorsqu'il est déterminé que les informations de jugement indiquant l'inachèvement du traitement de données correspondant ont été reçues en provenance du nombre prédéterminé, ou plus, de premiers appareils de communication, le second appareil est configuré de manière à transmettre, à la pluralité de premiers appareils de communication (101), des informations d'exigence établissant un état d'interdiction de demande dans lequel la transmission des informations de demande à un appareil voisin en mesure de communiquer avec le premier appareil de communication n'est pas autorisée, y compris lorsque le premier appareil de communication juge que le traitement de données correspondant ne s'achèvera pas.

7. Système (100) selon la revendication 6, dans lequel :
les appareils de la pluralité de premiers appareils de communication (101) sont respectivement configurés de manière à transmettre les informations de jugement indiquant l'achèvement du traitement de données correspondant, au second appareil de communication (102), directement, ou par l'intermédiaire d'un autre premier appareil de communication parmi la pluralité de premiers appareils de communication (101) ;
le second appareil de communication (102) étant configuré de manière à :
recevoir les informations de jugement indiquant l'achèvement du traitement de données correspondant ;
déterminer si les informations de jugement indiquant l'achèvement du traitement de données correspondant ont été reçues en provenance d'un nombre prédéterminé, ou plus, de premiers appareils de communication parmi la pluralité de premiers appareils de communication (101) ; et
lorsqu'il est déterminé que les informations de jugement indiquant l'achèvement du traitement de données correspondant ont été reçues en provenance du nombre prédéterminé, ou plus, des premiers appareils de communication, le second appareil de communication est configuré de manière à transmettre, à la pluralité de premiers appareils de communication (101), des informations d'exigence libérant l'état d'interdiction de demande.

8. Système (100) selon la revendication 6, dans lequel :
les appareils de la pluralité de premiers appareils de communication (101) sont respectivement configurés de manière à transmettre les informations de jugement indiquant un inachèvement du traitement de données correspondant, au second appareil de communication (102), directement, ou par l'intermédiaire d'un autre premier appareil de communication parmi la pluralité de premiers appareils de communication ;
le second appareil de communication (102) étant configuré de manière à :
recevoir les informations de jugement indiquant l'inachèvement du traitement de données correspondant ;
déterminer, sur la base de la réception des informations de jugement indiquant l'inachèvement du traitement de données correspondant, le nombre de premiers appareils de communication transmettant les informations de jugement indiquant l'inachèvement du traitement de données correspondant parmi la pluralité de premiers appareils de communication (101) ;
transmettre, à la pluralité de premiers appareils de communication (101), des informations de détermination basées sur le nombre déterminé ;
les appareils de la pluralité de premiers appareils de communication (101) sont respectivement configurés de manière à :
recevoir les informations de détermination ;
exécuter une partie du traitement de données correspondant pour une proportion basée sur les informations de détermination, lorsqu'il est déterminé que le traitement de données correspondant ne s'achèvera pas ; et
transmettre, au premier appareil, un résultat d'exécution de la partie du traitement de données correspondant, et des informations de demande amenant le premier appareil à exécuter un traitement de données distinct de la partie du traitement de données correspondant, et transmettre, au second appareil, un résultat d'exécution du traitement de données correspondant.

9. Procédé de communication d'un appareil de communication (101), comprenant les étapes ci-dessous consistant à :
par le biais de l'appareil de communication :
détecter une occurrence d'un événement, après avoir également détecté une ou plusieurs occurrences précédentes de l'événement ;
déterminer si, soit un intervalle de temps entre l'occurrence de l'événement et l'occurrence précédente de l'événement, soit une valeur moyenne d'intervalles de temps entre des occurrences détectées de l'événement et leurs occurrences précédentes respectives, est inférieur(e) ou égal (e) à une valeur de seuil stockée, et le cas échéant, fournir en sortie des informations de jugement indiquant qu'un traitement de données correspondant à l'événement détecté ne s'achèvera pas avant une occurrence d'un événement subséquent à l'événement détecté, et sinon, fournir en sortie des informations de jugement indiquant que le traitement de données correspondant à l'événement détecté s'achèvera avant une occurrence d'un événement subséquent à l'événement détecté ;
lorsque l'entrée d'informations de jugement indique l'achèvement du traitement de données correspondant, exécuter le traitement de données correspondant, et transmettre, à un premier appareil en mesure de communiquer avec celui-ci, un résultat d'exécution qui correspond au traitement de données correspondant ; et
lorsque l'entrée d'informations de jugement indique un inachèvement du traitement de données correspondant, transmettre, au premier appareil, des informations de demande amenant le premier appareil à exécuter le traitement de données correspondant et à transmettre un résultat d'exécution du traitement de données correspondant à un second appareil en mesure de communiquer avec le premier appareil.
